# EUROPEAN PATENT SPECIFICATION

(11) **EP 3 067 827 B1**
(45) Date of publication and mention of the grant of the patent: **10.07.2024**
(21) Application number: 16158992.4
(22) Date of filing: 07.03.2016
(51) Int. Cl.: G06V 20/59, G08B 21/06, B60K 28/06, B60W 50/14, B60W 40/08, G06T 7/70, G08B 5/36

(54) **DRIVER DISTRACTION DETECTION SYSTEM**
FAHRERDISTRAKTIONSDETEKTIONSSYSTEM
SYSTÈME DE DÉTECTION DE DISTRACTION DU CONDUCTEUR

(30) Priority: 13.03.2015 US 201514657070
(43) Date of publication of application: 14.09.2016
(73) Proprietor: Harman International Industries, Incorporated, Stamford, CT 06901 (US)
(72) Inventor: HAMPIHOLI, Vallabha Vasant, 560035 Bangalore (IN)
(74) Representative: Westphal, Mussgnug & Partner, Patentanwälte mbB

(56) References cited:
- EP-A1- 1 510 849
- EP-A1- 2 743 117
- WO-A1-2007/145566
- US-A1- 2004 239 509
- L. FLETCHER ET AL: "Driver Inattention Detection based on Eye Gaze--Road Event Correlation", INTERNATIONAL JOURNAL OF ROBOTICS RESEARCH., vol. 28, no. 6, 20 May 2009 (2009-05-20), US, pages 774 - 801, XP055281585, ISSN: 0278-3649, DOI: 10.1177/0278364908099459
- TAWARI ASHISH ET AL: "Attention estimation by simultaneous analysis of viewer and view", 17TH INTERNATIONAL IEEE CONFERENCE ON INTELLIGENT TRANSPORTATION SYSTEMS (ITSC), IEEE, 8 October 2014 (2014-10-08), pages 1381 - 1387, XP032685892, DOI: 10.1109/ITSC.2014.6957880

## Description

### FIELD

The disclosure relates to assessing driver distraction based on the output of a wearable device and other sensors.

### BACKGROUND

Distracted driving may include any activity that could divert a person's attention away from the primary task of driving. All distractions endanger driver, passenger, and bystander safety and could increase the chance of a motor vehicle crash. Some types of distraction include visual distraction, where the driver takes his/her eyes off the road, manual distraction, where the driver takes his/her hands off the wheel, and cognitive distraction, where the driver takes his/her mind off of driving. The severity of the distraction could depend on both the level and duration of these distractions and may be compounded by external factors such as speed and location of vehicle and objects in the path of the vehicle, for example.

Document US 2004/0239509 A1 discloses an object awareness determination system. The system includes an object monitor including an object detection sensor for sensing an object in a field of view and determining a position of the object. The system also includes an eye gaze monitor including an imaging camera oriented to capture images of the vehicle driver including an eye of the driver. The gaze monitor determines an eye gaze vector. The system further has a controller for determining driver awareness of the object based on the detected object position and the eye gaze vector.

Document L. Fletcher et al. "Driver Inattention Detection based on Eye Gaze-Road Event Correlation", in International Journal of Robotics Research, vol. 28, no. 6, 20. May 2009, pages 774-801, discloses a system for detecting inattention of a vehicle driver. To detect inattention, the driver's observations are estimated in real-time within the vehicle. Through the integration of driver eye-gaze tracking and road scene event detection, the driver behavior can be validated against a model of expected behavior to determine cases of momentary driver inattention.

Document EP 2 743 117 A1 discloses a system to monitor and reduce vehicle operator impairment. The system facilitates monitoring a vehicle operator, the environment ahead of the vehicle, and/or forces acting on the vehicle during the course of the vehicle operation to determine whether the vehicle operator is impaired (e.g., distracted, drowsy, intoxicated), alerting the vehicle operator when impairment is detected, and log data relating to vehicle operator impairment for further analysis. The system may monitor the vehicle operator, the environment ahead of the vehicle, and/or forces acting on the vehicle using either or both of optical sensors or accelerometers. In particular, one optical sensor may monitor the vehicle operator to detect eye blinks, head nods, head rotations, and/or gaze fixation. Another optical sensor may monitor the road ahead of the vehicle to detect lane deviation, lane centering, and time to collision.

Document Tawari Ashish et al. "Attention estimation by simultaneous analysis of viewer and view", 17th International IEEE Conference on Intelligent Transportation Systems, 8. October 2014, pages 1381 - 1387, discloses a system for estimating the attention of a driver wearing a first person view camera using salient objects to improve gaze estimation. The system automatically filters out the dashboard of the car, along with other parts of the instrumentation. The remaining area is used as a region of interest for a pedestrian detector. Two cameras looking at the driver are used to detetrmine the direction of the driver's gaze, by examining the eye corners and the center of the iris. This coarse gaze estimation is then linked to the detected pedestrians to determine which pedestrian the driver is focused on at any given time.

Document WO 2007/145566 A1 discloses a method on analyzing data based on the physiological orientation of a driver. Data that is descriptive of a driver's gaze-direction is processed and criteria defining a location of driver interest is determined. Based on the determined criteria, gaze-direction instances are classified as either on-location or off-location. The classified instances can then be used for further analysis, generally relating to times of elevated driver workload and not driver drowsiness. The classified instances are transformed into one of two binary values (e.g., 1 and 0) representative of whether the respective classified instance is on or off location.

### SUMMARY

Embodiments are described for determining and responding to driver distractions. An example in-vehicle computing system of a vehicle includes an external device interface communicatively connecting the in-vehicle computing system to a wearable device, the wearable device including a front-facing camera which captures images of an environment surrounding the vehicle, and a driver-facing camera which monitors a driver and their movement when inside the vehicle, an inter-vehicle system communication module communicatively connecting the in-vehicle computing system to one or more vehicle systems of the vehicle, a processor, and a storage device storing instructions executable by the processor to receive image data from the driver-facing camera of the wearable device via the external device interface, and determine a driver state based on the received image data. The instructions are further executable to, responsive to determining that the driver state indicates that the driver is distracted, receive vehicle data from one or more of the vehicle systems via the inter-vehicle system communication module, determine a vehicle state based on the vehicle data, determine object data comprising objects in a path of the vehicle and trajectories of objects in the path of the vehicle based on the received image data from the front-facing camera, determine a distraction severity rank based on a combination of the driver state, the object data, and the vehicle state, wherein the vehicle state includes a vehicle speed, a vehicle trajectory, and a vehicle location, and control one or more devices of the vehicle to perform a selected action based on the distraction severity rank.

An example method of determining driver distraction includes receiving image data from a driver-facing camera of a wearable device, and determining a driver state based on the received image data. Responsive to determining that the driver state indicates that the driver is distracted, the method further includes receiving vehicle data from one or more vehicle systems, determining a vehicle state based on the vehicle data, determining object data comprising objects in a path of the vehicle and trajectories of the objects in the path of the vehicle based on image data received from a front-facing camera of the wearable device. The example method further includes determining a distraction severity rank based on a combination of the driver state, the object data, and the vehicle state, wherein the vehicle state includes a vehicle speed, a vehicle trajectory, and a vehicle location, and controlling one or more devices of the vehicle to perform a selected action based on the distraction severity rank .

An example distraction monitoring system includes a wearable device including a driver-facing camera, an outward-facing camera, and one or more sensors, an in-vehicle computing system communicatively connected to the wearable device and one or more vehicle systems, the in-vehicle computing system comprising a first processor and a first storage device, and a cloud computing device remote from the in-vehicle computing system and communicatively connected to the in-vehicle computing system via a network, the cloud computing device comprising a second processor and a second storage device. One or more of the first storage device and the second storage device storing first instructions executable by a respective one or more of the first processor and the second processor to receive image data from the driver-facing camera and sensor data from the one or more sensors of the wearable device indicating a driver state, receive image data from the outward-facing camera of the wearable device indicating object states of one or more objects, receive vehicle data from one or more vehicle systems to indicate vehicle state, and select an action to be performed based on the indicated driver state, object states, and vehicle state. The first storage device may store second instructions executable by the first processor to transmit a command to one or more of a display device of the in-vehicle computing system, an audio device of the vehicle, and an engine control unit of the vehicle to perform the selected action.

### BRIEF DESCRIPTION OF THE DRAWINGS

The disclosure may be better understood from reading the following description of non-limiting embodiments, with reference to the attached drawings, wherein below:
FIG. 1 shows an example partial view of a vehicle cabin in accordance with one or more embodiments of the present disclosure;
FIG. 2 shows an example in-vehicle computing system in accordance with one or more embodiments of the present disclosure;
FIG. 3A shows a block diagram of an example distraction determination system in accordance with one or more embodiments of the present disclosure;
FIG. 3B shows a block diagram of an example distraction determination system in accordance with one or more embodiments of the present disclosure;
FIG. 4 is a flow chart of an example method for generating warnings based on a calculated severity rank range from the perspective of a head unit in accordance with one or more embodiments of the present disclosure;
FIG. 5 is a flow chart for an example method of determining a distraction level of a driver in accordance with one or more embodiments of the present disclosure;
FIG. 6 is a flow chart for an example method of determining a distraction severity rank in accordance with one or more embodiments of the present disclosure;
FIG. 7 shows an example table mapping severity rank R to driver states and vehicle conditions in accordance with one or more embodiments of the present disclosure;
FIG. 8 is a flow chart for an example method of determining an action to be performed responsive to example driver states and vehicle conditions in accordance with one or more embodiments of the present disclosure; and
FIG. 9 is a flow chart for an example method of determining an action to be performed responsive to example driver states, object states, and vehicle conditions in accordance with one or more embodiments of the present disclosure.

### DETAILED DESCRIPTION

As described above, driver distraction may be dangerous to occupants of a vehicle, as well as people in a vicinity of the vehicle. However, by only monitoring a driver state, or by monitoring only a small number of distraction-related behaviors of a driver, an inappropriate response to a distracted driver may be provided. For example, if a driver is nodding off to sleep, a visual warning may be insufficient to correct the distracted behavior. As another example, if a driver briefly looks away from the road, but there are no objects in the path of the vehicle, a loud, audible warning of driver distraction may be unnecessary and instead startle the driver, causing the driver to lose control of the vehicle. A distraction monitoring system that not only monitors the level of driver distraction, but also effectively responds to such distraction in a timely manner may address the issue of distracted driving and the major traffic safety issue that such driving poses.

Accordingly, the disclosure provides a distraction monitoring system including one or more of an in-vehicle computing system and a cloud computing device that receives sensor data from a wearable device and/or other sensor devices to determine a driver state and a state of objects in a vehicle environment. The in-vehicle computing system and/or cloud computing device may also receive data from vehicle systems in order to determine a vehicle state. By correlating the driver, object(s), and vehicle state, the distraction monitoring system may first determine whether the driver is distracted, and then determine a severity of that distraction. The distraction monitoring system may perform a different action (e.g., provide a visual alert, provide an audible alert, and/or perform a vehicle control) responsive to different levels of distraction severity, as different types of distractions may benefit from different types of warnings/responses. In this way, a driver may be alerted to his/her distraction in an appropriate manner based on an intelligent combination of the different types of data.

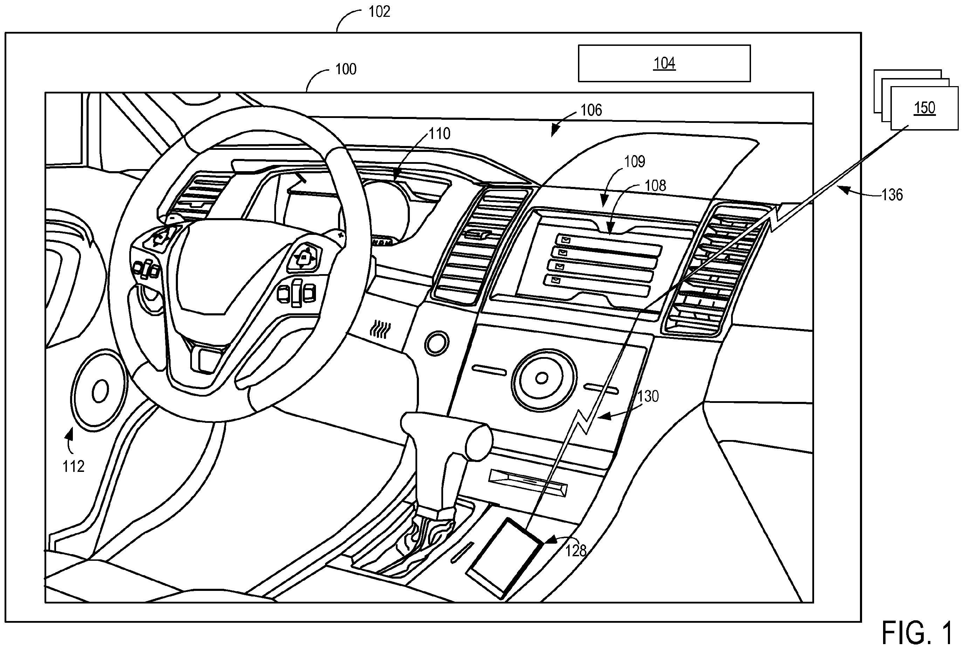

FIG. 1 shows an example partial view of one type of environment for a communication system: an interior of a cabin 100 of a vehicle 102, in which a driver and/or one or more passengers may be seated. Vehicle 102 of FIG. 1 may be a motor vehicle including drive wheels (not shown) and an internal combustion engine 104. Internal combustion engine 104 may include one or more combustion chambers, which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128.

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle.

The cabin 100 may include one or more sensors for monitoring the vehicle, the user, and/or the environment. For example, the cabin 100 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in the cabin 100, etc. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as from sensors coupled to external devices 150 and/or mobile device 128.

Cabin 100 may also include one or more user objects, such as mobile device 128, that are stored in the vehicle before, during, and/or after travelling. The mobile device may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], Ethernet, etc.) or wireless (e.g., via BLUETOOTH, WI-FI, Near-Field Communication [NFC], cellular connectivity, etc.) and configured to provide two-way communication between the mobile device and the in-vehicle computing system. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

In-vehicle computing system 109 may also be communicatively coupled to additional devices operated and/or accessed by the user but located external to vehicle 102, such as one or more external devices 150. In the depicted embodiment, external devices 150 are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, GPS system, etc. External devices 150 may be connected to the in-vehicle computing system via communication link 136, which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

In the example environment illustrated in FIG. 1, the in-vehicle computing system 109 may be connected to one or more vehicle systems, such as speakers 112, display 108, vehicle sensors, and/or other suitable vehicle systems via any suitable network. In some examples, the in-vehicle computing system 109 includes a talker device configured to transmit audio/video data to listener devices, such as speakers 112 and display 108 via a network. The network may be configured in accordance with Layer 2 of the Open Systems Interconnection (OSI) model, in which routing and forwarding decisions or determinations in the network may be performed on a media access control (MAC) addressing basis. An example Layer 2 network may be an Ethernet Audio/Video Bridging (AVB) network. For Layer 2 networks configured as AVB networks, the talkers and the listeners may be configured to communicate over the AVB network using various AVB standards and protocols, including the Institute of Electrical and Electronics Engineers (IEEE) 802.1AS-2011 (gPTP) for network timing and synchronization, IEEE 802.1Q-2011 clause 34 for queuing and forwarding streaming data, IEEE 802.1Q-2011 clause 35 (Stream Reservation Protocol (SRP)) for reserving a network connection or path and/or resources such as bandwidth for communication over the network connection, and/or IEEE 1722-2011 related to a possible data streaming format. Other AVB-related standards and protocols, and/or other versions of the AVB standards and protocols, previously, currently, or later developed, may additionally or alternatively be used.

It is to be understood that FIG. 1 depicts one example environment, however the communication systems and methods described herein may be utilized in any suitable environment. Any suitable devices that transmit and/or receive information, sense data, and/or otherwise contribute to a driver distraction detection and/or alert system may be utilized as the systems and/or to perform the methods described herein.

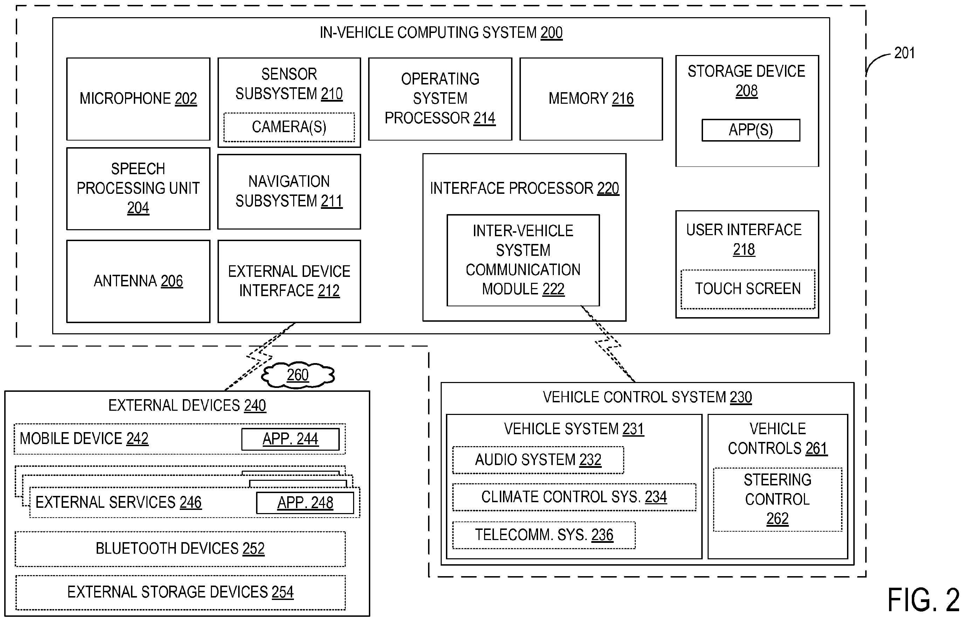

FIG. 2 shows a block diagram of an in-vehicle computing system 200 configured and/or integrated inside vehicle 201. In-vehicle computing system 200 may be an example of in-vehicle computing system 109 of FIG. 1 and/or may perform one or more of the methods described herein in some embodiments. In some examples, the in-vehicle computing system may be a vehicle infotainment system configured to provide information-based media content (audio and/or visual media content, including entertainment content, navigational services, etc.) to a vehicle user to enhance the operator's in-vehicle experience. The vehicle infotainment system may include, or be coupled to, various vehicle systems, sub-systems, hardware components, as well as software applications and systems that are integrated in, or integratable into, vehicle 201 in order to enhance an in-vehicle experience for a driver and/or a passenger.

In-vehicle computing system 200 may include one or more processors including an operating system processor 214 and an interface processor 220. Operating system processor 214 may execute an operating system on the in-vehicle computing system, and control input/output, display, playback, and other operations of the in-vehicle computing system. Interface processor 220 may interface with a vehicle control system 230 via an inter-vehicle system communication module 222.

Inter-vehicle system communication module 222 may output data to other vehicle systems 231 and vehicle control elements 261, while also receiving data input from other vehicle components and systems 231, 261, e.g. by way of vehicle control system 230. When outputting data, inter-vehicle system communication module 222 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network [CAN] bus through which engine related information may be communicated, a climate control CAN bus through which climate control related information may be communicated, and a multimedia data network through which multimedia data is communicated between multimedia components in the vehicle). For example, the in-vehicle computing system may retrieve from the engine CAN bus the current speed of the vehicle estimated by the wheel sensors, a power state of the vehicle via a battery and/or power distribution system of the vehicle, an ignition state of the vehicle, etc. In addition, other interfacing means such as Ethernet may be used as well without departing from the scope of this disclosure.

A non-volatile storage device 208 may be included in in-vehicle computing system 200 to store data such as instructions executable by processors 214 and 220 in non-volatile form. The storage device 208 may store application data to enable the in-vehicle computing system 200 to run an application for connecting to a cloud-based server and/or collecting information for transmission to the cloud-based server. The application may retrieve information gathered by vehicle systems/sensors, input devices (e.g., user interface 218), devices in communication with the in-vehicle computing system (e.g., a mobile device connected via a Bluetooth link), etc. In-vehicle computing system 200 may further include a volatile memory 216. Volatile memory 216 may be random access memory (RAM). Non-transitory storage devices, such as non-volatile storage device 208 and/or volatile memory 216, may store instructions and/or code that, when executed by a processor (e.g., operating system processor 214 and/or interface processor 220), controls the in-vehicle computing system 200 to perform one or more of the actions described in the disclosure.

A microphone 202 may be included in the in-vehicle computing system 200 to receive voice commands from a user, to measure ambient noise in the vehicle, to determine whether audio from speakers of the vehicle is tuned in accordance with an acoustic environment of the vehicle, etc. A speech processing unit 204 may process voice commands, such as the voice commands received from the microphone 202. In some embodiments, in-vehicle computing system 200 may also be able to receive voice commands and sample ambient vehicle noise using a microphone included in an audio system 232 of the vehicle.

One or more additional sensors may be included in a sensor subsystem 210 of the in-vehicle computing system 200. For example, the sensor subsystem 210 may include a camera, such as a rear view camera for assisting a user in parking the vehicle and/or a cabin camera for identifying a user (e.g., using facial recognition and/or user gestures). Sensor subsystem 210 of in-vehicle computing system 200 may communicate with and receive inputs from various vehicle sensors and may further receive user inputs. For example, the inputs received by sensor subsystem 210 may include transmission gear position, transmission clutch position, gas pedal input, brake input, transmission selector position, vehicle speed, engine speed, mass airflow through the engine, ambient temperature, intake air temperature, etc., as well as inputs from climate control system sensors (such as heat transfer fluid temperature, antifreeze temperature, fan speed, passenger compartment temperature, desired passenger compartment temperature, ambient humidity, etc.), an audio sensor detecting voice commands issued by a user, a fob sensor receiving commands from and optionally tracking the geographic location/proximity of a fob of the vehicle, etc. While certain vehicle system sensors may communicate with sensor subsystem 210 alone, other sensors may communicate with both sensor subsystem 210 and vehicle control system 230, or may communicate with sensor subsystem 210 indirectly via vehicle control system 230. A navigation subsystem 211 of in-vehicle computing system 200 may generate and/or receive navigation information such as location information (e.g., via a GPS sensor and/or other sensors from sensor subsystem 210), route guidance, traffic information, point-of-interest (POI) identification, and/or provide other navigational services for the driver.

External device interface 212 of in-vehicle computing system 200 may be coupleable to and/or communicate with one or more external devices 240 located external to vehicle 201. While the external devices are illustrated as being located external to vehicle 201, it is to be understood that they may be temporarily housed in vehicle 201, such as when the user is operating the external devices while operating vehicle 201. In other words, the external devices 240 are not integral to vehicle 201. The external devices 240 may include a mobile device 242 (e.g., connected via a Bluetooth connection) or an alternate Bluetooth-enabled device 252. Mobile device 242 may be a mobile phone, smart phone, wearable devices/sensors that may communicate with the in-vehicle computing system via wired and/or wireless communication, or other portable electronic device(s). Other external devices include external services 246. For example, the external devices may include extra-vehicular devices that are separate from and located externally to the vehicle. Still other external devices include external storage devices 254, such as solid-state drives, pen drives, USB drives, etc. External devices 240 may communicate with in-vehicle computing system 200 either wirelessly or via connectors without departing from the scope of this disclosure. For example, external devices 240 may communicate with in-vehicle computing system 200 through the external device interface 212 over network 260, a universal serial bus (USB) connection, a direct wired connection, a direct wireless connection, and/or other communication link. The external device interface 212 may provide a communication interface to enable the in-vehicle computing system to communicate with mobile devices associated with contacts of the driver. For example, the external device interface 212 may enable phone calls to be established and/or text messages (e.g., SMS, MMS, etc.) to be sent (e.g., via a cellular communications network) to a mobile device associated with a contact of the driver.

One or more applications 244 may be operable on mobile device 242. As an example, mobile device application 244 may be operated to aggregate user data regarding interactions of the user with the mobile device. For example, mobile device application 244 may aggregate data regarding music playlists listened to by the user on the mobile device, telephone call logs (including a frequency and duration of telephone calls accepted by the user), positional information including locations frequented by the user and an amount of time spent at each location, etc. The collected data may be transferred by application 244 to external device interface 212 over network 260. In addition, specific user data requests may be received at mobile device 242 from in-vehicle computing system 200 via the external device interface 212. The specific data requests may include requests for determining where the user is geographically located, an ambient noise level and/or music genre at the user's location, an ambient weather condition (temperature, humidity, etc.) at the user's location, etc. Mobile device application 244 may send control instructions to components (e.g., microphone, etc.) or other applications (e.g., navigational applications) of mobile device 242 to enable the requested data to be collected on the mobile device. Mobile device application 244 may then relay the collected information back to in-vehicle computing system 200.

Likewise, one or more applications 248 may be operable on external services 246. As an example, external services applications 248 may be operated to aggregate and/or analyze data from multiple data sources. For example, external services applications 248 may aggregate data from one or more social media accounts of the user, data from the in-vehicle computing system (e.g., sensor data, log files, user input, etc.), data from an internet query (e.g., weather data, POI data), etc. The collected data may be transmitted to another device and/or analyzed by the application to determine a context of the driver, vehicle, and environment and perform an action based on the context (e.g., requesting/sending data to other devices).

Vehicle control system 230 may include controls for controlling aspects of various vehicle systems 231 involved in different in-vehicle functions. These may include, for example, controlling aspects of vehicle audio system 232 for providing audio entertainment to the vehicle occupants, aspects of climate control system 234 for meeting the cabin cooling or heating needs of the vehicle occupants, as well as aspects of telecommunication system 236 for enabling vehicle occupants to establish telecommunication linkage with others.

Audio system 232 may include one or more acoustic reproduction devices including electromagnetic transducers such as speakers. Vehicle audio system 232 may be passive or active such as by including a power amplifier. In some examples, in-vehicle computing system 200 may be the only audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 234 may be configured to provide a comfortable environment within the cabin or passenger compartment of vehicle 201. Climate control system 234 includes components enabling controlled ventilation such as air vents, a heater, an air conditioner, an integrated heater and air-conditioner system, etc. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 230 may also include controls for adjusting the settings of various vehicle controls 261 (or vehicle system control elements) related to the engine and/or auxiliary elements within a cabin of the vehicle, such as steering wheel controls 262 (e.g., steering wheel-mounted audio system controls, cruise controls, windshield wiper controls, headlight controls, turn signal controls, etc.), instrument panel controls, microphone(s), accelerator/brake/clutch pedals, a gear shift, door/window controls positioned in a driver or passenger door, seat controls, cabin light controls, audio system controls, cabin temperature controls, etc. Vehicle controls 261 may also include internal engine and vehicle operation controls (e.g., engine controller module, actuators, valves, etc.) that are configured to receive instructions via the CAN bus of the vehicle to change operation of one or more of the engine, exhaust system, transmission, and/or other vehicle system. The control signals may also control audio output at one or more speakers of the vehicle's audio system 232. For example, the control signals may adjust audio output characteristics such as volume, equalization, audio image (e.g., the configuration of the audio signals to produce audio output that appears to a user to originate from one or more defined locations), audio distribution among a plurality of speakers, etc. Likewise, the control signals may control vents, air conditioner, and/or heater of climate control system 234. For example, the control signals may increase delivery of cooled air to a specific section of the cabin.

Control elements positioned on an outside of a vehicle (e.g., controls for a security system) may also be connected to computing system 200, such as via communication module 222. The control elements of the vehicle control system may be physically and permanently positioned on and/or in the vehicle for receiving user input. In addition to receiving control instructions from in-vehicle computing system 200, vehicle control system 230 may also receive input from one or more external devices 240 operated by the user, such as from mobile device 242. This allows aspects of vehicle systems 231 and vehicle controls 261 to be controlled based on user input received from the external devices 240.

In-vehicle computing system 200 may further include an antenna 206. Antenna 206 is shown as a single antenna, but may comprise one or more antennas in some embodiments. The in-vehicle computing system may obtain broadband wireless internet access via antenna 206, and may further receive broadcast signals such as radio, television, weather, traffic, and the like. The in-vehicle computing system may receive positioning signals such as GPS signals via one or more antennas 206. The in-vehicle computing system may also receive wireless commands via RF such as via antenna(s) 206 or via infrared or other means through appropriate receiving devices. In some embodiments, antenna 206 may be included as part of audio system 232 or telecommunication system 236. Additionally, antenna 206 may provide AM/FM radio signals to external devices 240 (such as to mobile device 242) via external device interface 212.

One or more elements of the in-vehicle computing system 200 may be controlled by a user via user interface 218. User interface 218 may include a graphical user interface presented on a touch screen, such as touch screen 108 of FIG. 1, and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the in-vehicle computing system 200 and mobile device 242 via user interface 218. In addition to receiving a user's vehicle setting preferences on user interface 218, vehicle settings selected by in-vehicle control system may be displayed to a user on user interface 218. Notifications and other messages (e.g., received messages), as well as navigational assistance, may be displayed to the user on a display of the user interface. User preferences/information and/or responses to presented messages may be performed via user input to the user interface.

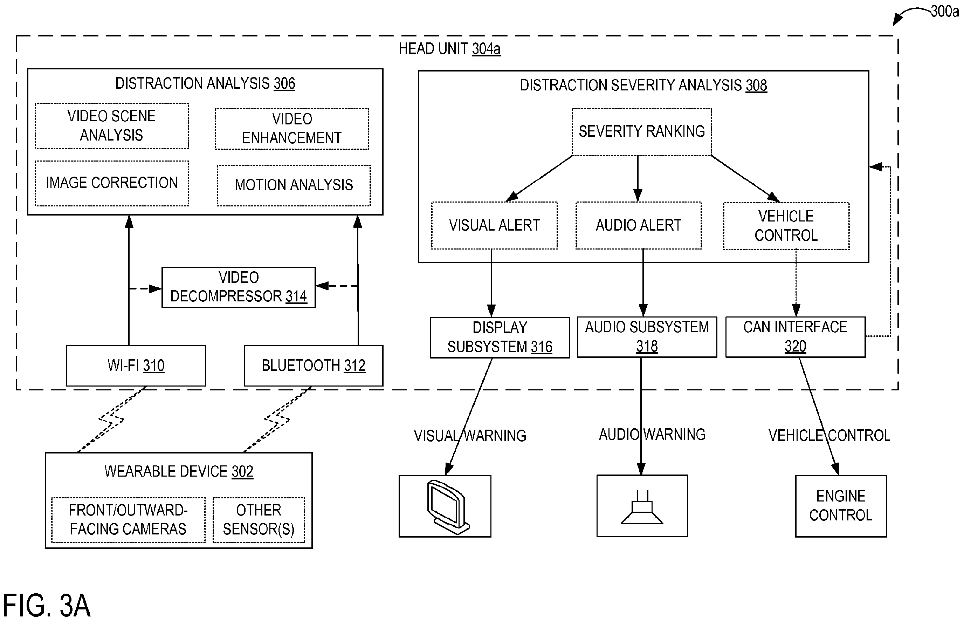

FIG. 3A shows a block diagram of a distraction monitoring system 300a, including an in-vehicle computing system (also referred to herein as a head unit) 304a configured and/or integrated inside of a vehicle, such as vehicle 102 of FIG. 1. The distraction monitoring system 300a further includes a mobile device, such as a wearable device 302.

In some example embodiments, the wearable device 302 may include a head-mounted display system that is mounted to the driver's face via the driver's nose and ears. In additional or alternative examples, the wearable device 302 may include a smartwatch or other wrist- or body-worn computing device. The wearable device 302 may additionally or alternatively be a self-containing unit that may be clipped on to an existing frame for glasses or another accessory, for example. Although only one wearable device 302 is shown in FIG. 3A, it is to be understood that any number of wearable or other mobile devices may be included in the distraction monitoring system 300a.

The wearable device 302 may be fitted with microphones to detect audio signals within the vehicle environment and may include additional sensors such as a biometric sensor, a perspiration level sensor, body temperature, electrocardiogram, glucometer, blood pressure, muscle sensor, weather sensor, etc. The wearable device 302 may additionally include plurality of cameras, with one or more cameras facing inside towards the driver wearing the device (inward- or driver-facing camera), and one or more cameras facing the outside of the driver/vehicle (front- or outward-facing camera). The driver-facing camera in the wearable device 302 monitors the driver's movement when inside the vehicle and the front-facing camera captures images of the environment surrounding the vehicle (e.g., the vehicle environment, which may include the cabin of the vehicle and/or an area around the exterior of the vehicle). The cameras of the wearable device 302 may further be equipped to capture raw static and/or motion image frames and the wearable device 302 may be capable of streaming the raw image frames and/or compressed video images over Wi-Fi (e.g., to a Wi-Fi interface 310 of head unit 304a), Bluetooth (e.g., to a Bluetooth interface 312 of the head unit), and/or any other suitable communication mechanism to the head unit 304.

The head unit 304 in embodiment shown in FIG. 3A may include the Wi-Fi interface 310, the Bluetooth interface 312, a video decompressor 314, a distraction analysis block 306, a distraction severity analysis block 308, a display subsystem 316, an audio subsystem 318, and a controller area network (CAN) interface 320. The distraction analysis block 306 may include instructions for performing video scene analysis, video enhancement, image correction, motion analysis, and/or any other suitable data processing and analysis to determine whether or not a driver is distracted.

In operation, any raw video signals from the wearable device 302 may be received by Wi-Fi interface 310 and/or Bluetooth interface 312 in the head unit 304a and passed to the distraction analysis block 306. Any compressed video signals may be received via Wi-Fi interface 310 and/or Bluetooth interface 312 in the head unit 304a and then decompressed in the video decompressor unit 314. In some examples, compressed video signals may be sent via Bluetooth due to the reduced bandwidth usage relative to un-compressed/raw data.

The data received by the distraction analysis block 306 may undergo correction like video stabilization at the image correction unit. As an example, bumps on the roads may shake, blur, or distort the signals. The image correction unit may stabilize the images against horizontal and/or vertical shake, and/or may correct for panning, rotation, and/or zoom, as an example. The video enhancement unit of the distraction analysis block 306 may perform additional enhancement in situations where there is poor lighting or high compression. Video processing and enhancement may include gamma correction, de-hazing, and/or de-blurring, and the video processing enhancement algorithms may operate to reduce noise in the input of low lighting video followed by contrast enhancement techniques such as tone-mapping, histogram stretching and equalization, and gamma correction to recover visual information in low lighting videos. The video scene analysis unit of the distraction analysis block 306 may recognize the content of the video coming in from the wearable device 302, which may further be used in the distraction severity analysis block 306. Analysis of the video sequences may involve a wide spectrum of techniques from low-level content analysis such as feature extraction, structure analysis, object detection, and tracking, to high-level semantic analysis such as scene analysis, event detection, and video mining. For example, by recognizing the content of the incoming video signals, it may be determined if the vehicle is in a freeway or within city limits, if there are any pedestrians, animals, or other objects/obstacles on the road, etc. The motion analysis unit may determine the ego motion and the motion of objects in the path of the vehicle. Ego motion estimation includes estimating a vehicle's moving position relative to lines on the road or street signs as being observed from the vehicle itself and may be determined by analyzing the associated camera images. By performing image processing (e.g., image correction, video enhancement, etc.) prior to or alongside performing image analysis (e.g., video scene analysis, motion analysis, etc.), the image data may be prepared in a suitable manner that is tuned to the type of analysis being performed. For example, image correction to reduce blur may allow video scene analysis to be performed more accurately by clearing up the appearance of edge lines used for object recognition.

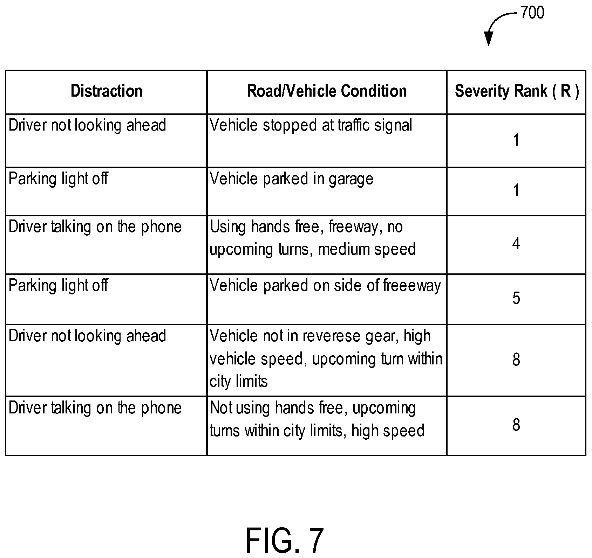

The distraction severity analysis block 308 may receive the output of the distraction analysis block 306 after the signals have undergone processing and analysis as described above and may estimate the severity of distraction using additional parameters such as vehicle speed, vehicle lighting (internal and/or external), and vehicle location derived from the controller area network (CAN) interface 320 of the head unit 304a. The severity ranking may depend on the level of distraction of the driver. Some examples of driver distraction include the driver not looking at the road for prolonged periods of time while driving, the driver not looking at the road for upcoming turns, the driver being distracted by music, etc. Other examples may include the driver being distracted while handling (e.g., providing user input to) infotainment units for prolonged period of time, the driver being sleepy or tired, and/or other driver states. Once the level of driver distraction is determined, the distraction severity analysis block 308 determines severity ranking R. The action performed by the system may vary as per the severity of the distraction. The severity ranking R may also be dependent on various factors such as the criticality of the event and the amount of time for which the driver is distracted. Some example scenarios and the resulting severity rank R that is generated is shown in FIG. 7 and described below.

If the severity rank R is in the first range (e.g., low), a visual alert may be indicated which may either be displayed in the display subsystem 316 of the head unit 304a and/or be sent out to any system capable of displaying the visual warning to the driver (e.g., another display in the vehicle, a display on the wearable device 302, a display of another mobile device in the vehicle, etc.). If the severity rank R is in the second range (e.g., medium), an audio alert may be indicated. The audio alert signal may either be used to generate an audio signal in the audio subsystem of the head unit 304a or may further be used to generate an audio alert in any system capable of generating the audio warning to the driver (e.g., a speaker system of the vehicle, a speaker of the wearable device 302, a speaker of another mobile device in the vehicle, etc.). In the embodiment shown in FIG. 3A, most of the data processing may occur in the head unit 304a. However, it may be possible to perform at least some of the data processing and/or analysis in a system outside the head unit 304a.

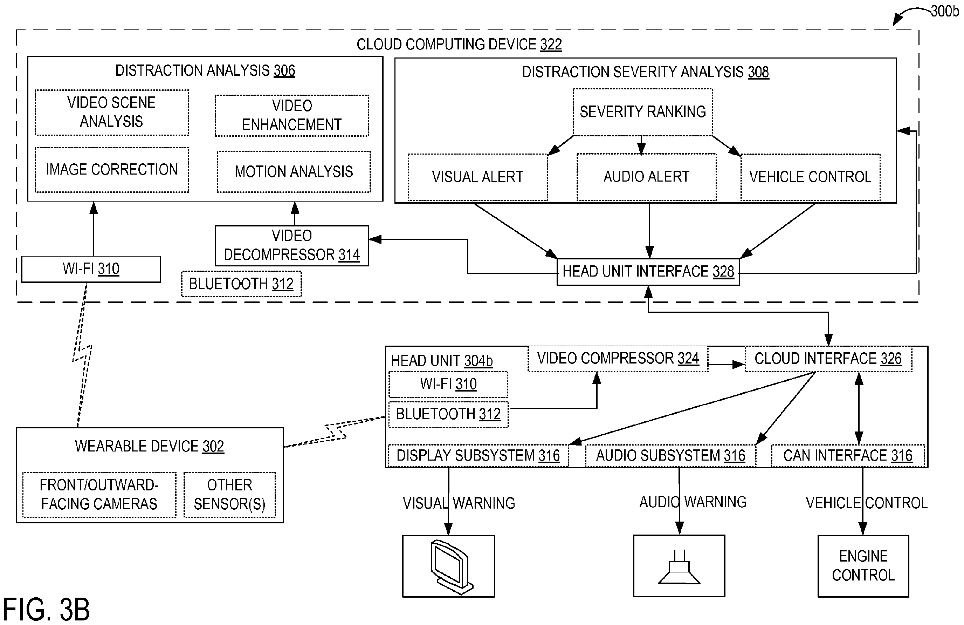

FIG. 3B shows an example block diagram of a distraction monitoring system 300b that may be used in such an example scenario, where some of the data processing may occur in a cloud computing device 322. Elements in FIG. 3B having the same number as a corresponding element of FIG. 3A are similar to those described in FIG. 3A in all aspects except that there may be additional elements to account for the location of units in the cloud computing device 322 instead of the head unit 304b. Although shown as including fewer elements than head unit 304a of FIG. 3A, it is to be understood that head unit 304b may additionally include one or more data processing/analysis units (e.g., the distraction analysis block 306, the video decompressor 314, and/or the distraction severity analysis block 308) included in head unit 304a of FIG. 3A. For example, the distraction monitoring system 300b as shown in FIG. 3B may represent units utilized when performing substantially all processing/analysis in the cloud computing device 322. However, in other scenarios, the data processing/analysis may be shared by both the cloud computing device 322 and the head unit 304b. For example, a first portion of the data from wearable device 302 may be processed and analyzed by the cloud computing device 322 and a second portion of the data from the wearable device 302 may be processed and analyzed by the head unit 304b. In other examples, certain types of processing and/or analysis may be performed for all data by one of the cloud computing device 322 and the head unit 304b and certain other types of processing and/or analysis may be performed for all data by the other one of the cloud computing device 322 and the head unit 304b.

The wearable device 302 may include a plurality of cameras and microphone, capable of streaming the raw or compressed video images similar to the one described in FIG. 3A. The raw images from the wearable device may be sent to the cloud computing device 322 via Wi-Fi interface 310 and/or Bluetooth interface 312. Additionally or alternately, the data from the wearable device 302 may be sent the head unit 304b via Bluetooth interface 312 and/or Wi-Fi interface 310. The data received by the head unit 304b may additionally be compressed by a video compressor 324, which may then be sent to cloud computing device 322 through a cloud interface 326. The cloud interface 326 in the head unit 304b may be capable of bi-directional communication with the head unit interface 328 located in the cloud computing device. The compressed data received by the head unit interface 328 in the cloud computing device may undergo video decompression as explained in FIG. 3A by the video decompressor unit 314. Similar to the embodiment shown in FIG. 3A, the data received from Wi-Fi interface 310 and/or Bluetooth interface 312 and the decompressed data received from the video decompressor 314, each of which are located in the cloud computing device 322, may further be processed and analyzed by the distraction analysis block 306 in much the same way as described in FIG. 3A. In addition, the distraction severity analysis unit 308, also located in the cloud computing device 322 may perform additional analysis and generate severity ranking, R. Depending on the severity ranking, different warning signals may be issued, which may then be communicated back to the head unit 304b through the head unit interface 328, and the corresponding warnings may be generated in the respective systems as explained in FIG. 3A.

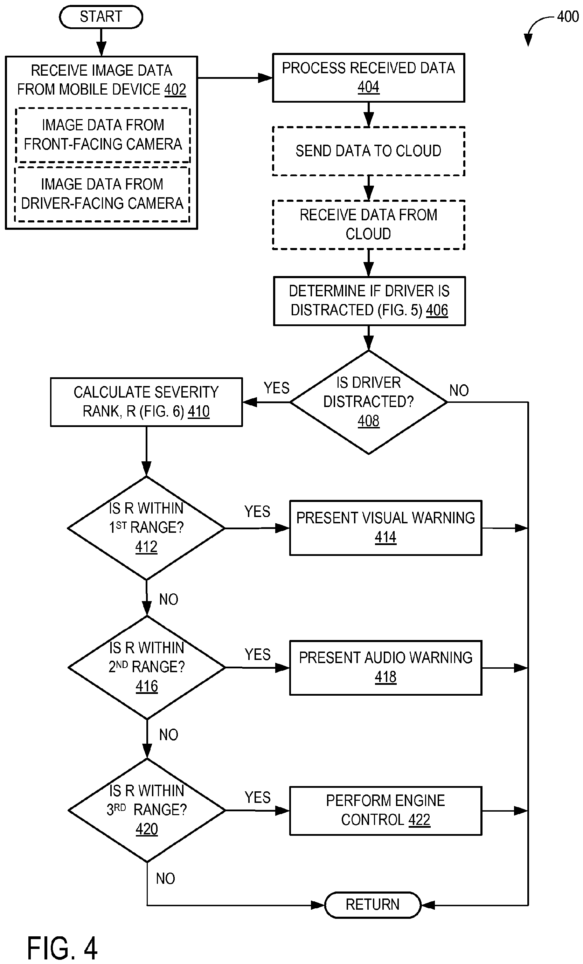

FIG. 4 is a flow chart of a method 400 of operating an in-vehicle computing system for generating warnings based on a calculated severity rank range from the perspective of a head unit of a vehicle. For example, method 400 may be performed by the in-vehicle computing system 200 of FIG. 2, based on the output of mobile device 242 (e.g., a wearable device, such as wearable device 302 of FIGS. 3A and 3B).

Method 400 includes, at 402, receiving data from the mobile device. In one example, the mobile device may be a wearable device 302 described in FIGS. 3A and 3B. The data may include image data from the front-facing camera and the driver-facing camera, for example. Specifically, the data may be received at the in-vehicle computing system from one or more wearable devices. The wearable devices worn by a driver of a vehicle may include one or more sensors such as a biometric sensor, a temperature sensor, a perspiration level sensor, etc.

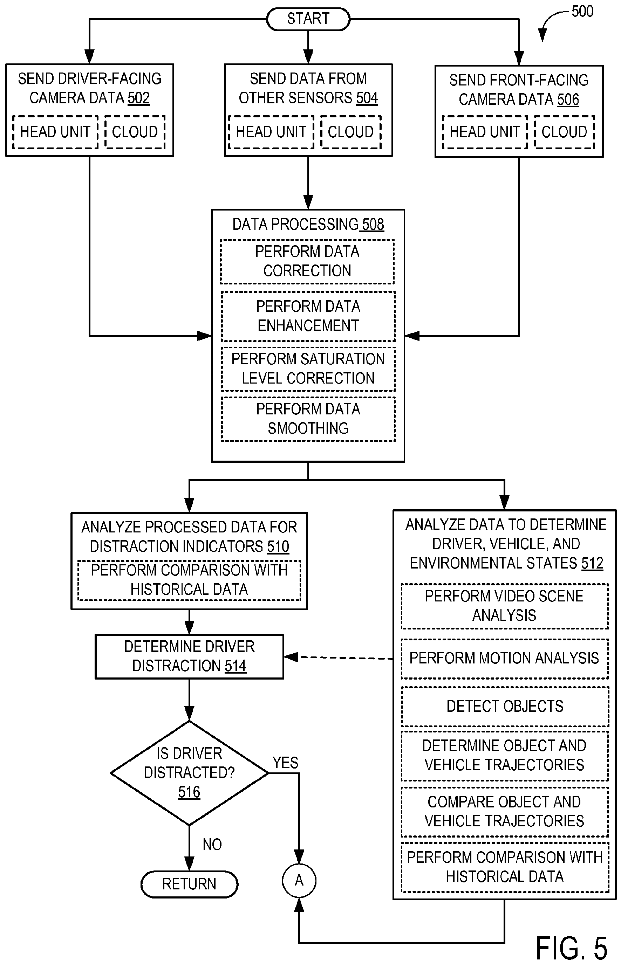

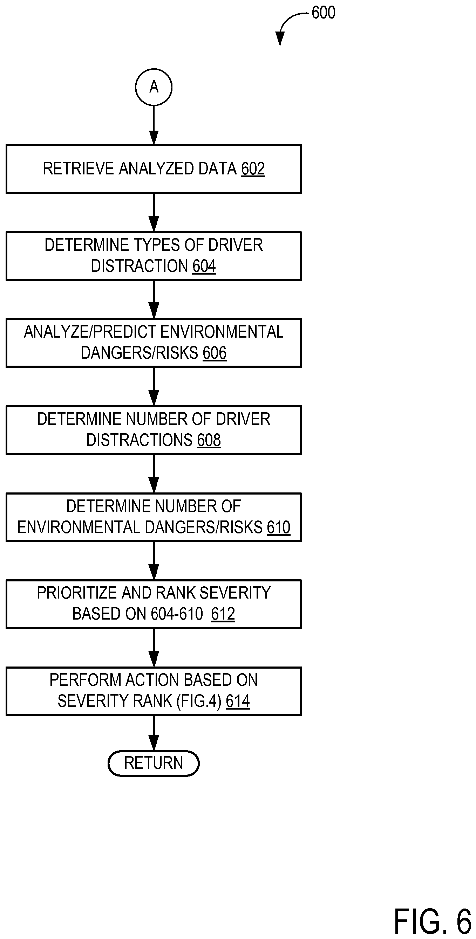

At 404, the method includes processing the data, which may be processed in the head unit (e.g., head unit 304a of FIG. 3A) itself as described in FIG. 3A or may be sent to the cloud for further processing as explained in FIG. 3B, in which case, the processed data may be received back from the cloud to the head unit (e.g., head unit 304b of FIG. 3B). At 406, the method includes determining the distraction of the driver (as will be explained below with respect to FIG. 5). At 408, the method checks if the driver is distracted. If the driver is distracted, then the method proceeds to 410, where the severity rank R is calculated (e.g., based on a correlation of data from various sources, as explained below with respect to FIG. 6). If it is determined at 408 that the driver is not distracted then the method returns to continue receiving image data and monitoring driver distraction.

At 412, the method checks if the calculated severity rank R is within a first range. The first range may be a value of severity rank R that indicates a relatively low level of severity of the driver distraction. For example, the first range may correspond to an indication of driver distraction while the vehicle is not in any immediate danger of collision, an indication of driver distraction that is predicted to be short-lived, etc. If the severity rank is in the first range (e.g., "YES" at 412), then the method proceeds to 414, where the head unit instructs a display device to present a visual warning. A visual warning may include, but is not limited to, a warning displayed on the heads up display or on the main infotainment screen. If the severity rank R is not within the first range, then the method proceeds to 416, where the system determines if R is in the second range. For example, the second range may correspond to a relatively medium level of severity of driver distraction. An example medium level of severity may include a serious driver distraction (e.g., droopy eyes indicating sleepiness) while the vehicle is in an otherwise safe environment (e.g., no objects within a trajectory/path of the vehicle, driving at a low speed, etc.). If the severity rank R is within the second range (e.g., "YES" at 416), then the method proceeds to 418, where the head unit instructs an audio playback device to present an audio warning. In one example, an audio warning may be played on all the available audio zones in the system. If at 416, it is determined that R is not within the second range, then the method proceeds to 420, where the system checks if R is within the third range. The third range may correspond to a relatively high level of severity of driver distraction. An example high level of severity of driver distraction may include any driver distraction while an object in a vehicle environment is on a colliding course with the vehicle (e.g., an estimated trajectory of the object intersects with an estimated trajectory of the vehicle). If the severity ranking R is within the third range (e.g., "YES" at 420), then the method proceeds to 422, where the head unit instructs a vehicle system to perform engine control operations or other vehicle control operations. The engine operations may include automatically controlling the vehicle speed or braking for example (e.g., without driver or other user instruction to perform such vehicle control), while other vehicle control operations may include reducing multimedia related system volume for example. For extreme cases, an engine control operation performed at 422 may include automatically bringing the vehicle to a complete stop without driver or other user intervention. If R is not within the third range when checked at 420, the method returns. For example, the first range may correspond to a lowest range of severity ranking, and the second range may correspond to a higher range of severity rankings starting with a severity ranking immediately above the highest severity ranking in the first range. The third range may correspond to a range of severity rankings from the highest severity rank of the second range to a maximum possible severity rank. Therefore, any severity rank outside of the three ranges may correspond to a low enough severity rank to forego any warnings. In other examples, a severity rank outside of the checked severity ranks may result in a default action being performed (e.g., an audio and/or visual warning). Although three ranges are illustrated in FIG. 4, it is to be understood that any number of ranges and associated types of actions may be analyzed in the performance of method 400.

FIG. 5 is a flow chart of a method 500 for processing and analyzing the data received from a mobile device (e.g., wearable device 302 of FIGS. 3A and 3B) and includes further determining a distraction level of a driver from the perspective of the mobile device. At 502 of method 500, the mobile device sends out the data from a driver-facing camera of the mobile device. In one example, this may include data from the wearable device 302 of FIGS. 3A and 3B. The driver-facing camera data may include images that provide details about the driver head position, his/her stance, his/her eye position and may even include details such as gaze direction, pupil location, etc. that are able to be determined based on image analysis performed at one or more of a head unit (e.g., head unit 304a of FIG. 3A) and a cloud computing device (e.g., cloud computing device 322 of FIG. 3B). The image data may be sent to the head unit and/or the cloud to be processed and analyzed. At 504 of method 500, the mobile device sends out data from other sensors. These other sensors may include one or more wearable sensors, such as biometric sensors, a heart rate sensor, a temperature sensor, a perspiration level sensor, etc. This data may be sent to the head unit and/or to the cloud for further processing and analysis. At 506 of method 500, the mobile device may be instructed to send the data from the front-facing camera. This data includes image data that provides information about the external environment of the vehicle. For example, this data may include, images of the landscape around the vehicle, location of stop signs and signals, other vehicles in the path of the vehicle of interest, objects in the path of the vehicle of interest, objects including people, animals, etc. that are able to be determined based on image analysis performed at one or more of the head unit and the cloud computing device. This data is again sent to the head unit and/or the cloud. At 508 of method 500, the data from 502, 504, and 506 are processed as explained below.

The driver-facing camera data from 502 of method 500 may be processed at 508. Processing data at 508 may include performing data correction, data enhancement, performing saturation level correction, data smoothing etc. Performing data correction may include performing image processing designed to correct local defects in the image, for example. For example, this may include removing very small portions of the image that may be considered error or dust particles or anything else that may not be part of the actual image data. Additionally, the data correction may include luminance correction, color correction, aperture and exposure correction, white balance correction etc. At 508, the data from the front-facing camera may undergo data enhancement, in order to identify the driver's facial features clearly. Data enhancement may include adjusting contrast, gain, threshold etc., for example. The data from 502 may further be subjected to saturation level correction and smoothing. The data processing steps performed in 508 may render the image data from the driver-facing camera ready for further analysis in 510 and 512.

The data from the sensors sent at 504 may undergo similar processing at 508. As described in FIGS. 3A and 3B, the wearable device may include additional sensors such as a biometric sensor, a perspiration level sensor, etc. The biometric sensor or perspiration level sensor, for example may provide a trove of real-time medical information about the person wearing them. The perspiration level sensor monitors the sweat that it collects in a small patch, analyzes it, and can further used it for monitoring level of physical fatigue, and alerting the driver if they are overexerted, for example. A biometric sensor may be used for monitoring pulse or heart rate, and again, can be used to determine the health conditions of the driver. Other sensors such as body temperature sensor, electrocardiogram, glucometer, etc., may also be used to monitor the health conditions of the driver. The information from these sensors may be used to monitor in real time the state of the driver, which may be further processed in 508 using various signal processing techniques to extract useful data from such measurements.

The front-facing camera data from 506 of method 500 may be processed at 508. Processing data at 508 may include performing data correction, data enhancement, performing saturation level correction, data smoothing etc. as explained above. The data may include information about the vehicle trajectory, objects in the path of the vehicle, trajectory of the objects in the path of the vehicle, for example. Additionally, it may also include information about upcoming signals/stop signs, speed limits, school zone/hospital area, etc. The data processing steps performed in 508 may further render the image data from the driver-facing camera ready for further analysis in 510 and 512.

The data received from the driver-facing camera at 502, data from the other sensors at 504 and data from front-facing camera at 506 may be processed at 508 as explained above, and further analyzed at 510 and 512. For example, the data from the driver-facing camera that is processed at 508, may be used to determine the facial features of the driver for example. This may include, determining if the eyelids are closed or partially closed for prolonged periods of time for example. If the eyelids remain closed when compared with historical data, such eyelids' position compared to earlier times, for example, then it may be determined at 514 that the driver is distracted. As another example, the driver data may include position of the head. If it is determined that the position of the head is moving constantly by comparing with historical data at 510, which in one example, may be due to head nodding, it may be determined that the driver is distracted at 514. If, in another example, the driver data indicates that the driver's eye is looking in a direction other along the trajectory of the vehicle, for prolonged times (as derived from comparing with historical data at 510), it may be determined that the driver is distracted at 514.

The data from other sensors received from 504 may include information regarding the driver's health condition, for example, or weather conditions as another example. The information from the biometric sensors may be used to monitor in real time the state of the driver, which may be further used to determine if the driver is distracted at 514. The heart or pulse rate monitor may determine the rate at which the heart is beating. The heart of a healthy adult beats within the range of 60-100 times per minute at rest and an abnormally high pulse rate may include rates above 100 beats per minute. Rapid heart rates for prolonged periods of time may lead to dizziness, lightheadedness, fainting spells, palpitations, chest pains, and shortness of breath. By comparing the pulse rate with historical data at 510, and analyzed at 512 to determine the state of the driver, and may further be used to determine if the driver is distracted at 514. As another example, the weather condition information as determined from a weather sensor may be used to determine the driving conditions.

The data from the front-facing camera received from 506 may include information about the vehicle trajectory, objects in the path of the vehicle, trajectory of the objects in the path of the vehicle etc. as explained above. Additionally, it may also include information about upcoming signals/stop signs, speed limits, school zone/hospital area, etc. At 512, this data may be further analyzed by performing video scene analysis, performing motion analysis, detecting objects, determining object and vehicle trajectories, comparing object and vehicle trajectories and performing comparison with historical data, for example. As an example, if the data from the front-facing camera indicates that the driver is within city limits (from video scene analysis, for example), and that there is an upcoming stop signal (from object detection) and that a pedestrian is across the road (from object detection), waiting to cross the pedestrian crossing at the stop signal. At 512, the trajectories of the vehicle and the pedestrian may be determined and further compared and may be subsequently analyzed in the performance of the flow chart illustrated in FIG. 6 to determine the distraction severity rank R as explained below in reference to FIG. 6. As another example, if the vehicle is determined to be on the highway (from video scene analysis), and there are vehicles in the next lanes (object detection), with indicators blinking to indicate lane change (video scene analysis), the trajectories of all the vehicles may be determined and compared and may be subsequently analyzed in the performance of the flow chart illustrated in FIG. 6. At 516, it may be checked if the diver is distracted, if yes, then the method 500 proceeds to the method illustrated in FIG. 6, if not, the method 500 returns.

FIG. 6 is a flow chart of a method 600 for determining distraction severity rank. At 602 of method 600, the analyzed data from FIG. 5 may be retrieved. This may include the data from the driver-facing camera, the data from other sensors and the data from the front-facing camera that are further processed and analyzed. At 604, the types of driver distraction may be determined. For example, it may be determined from the driver-facing camera that the driver is not looking in the path of the vehicle, indicating that he/she may have a visual distraction. For example, if the driver is looking at a billboard or a cell phone, or looking at objects inside the vehicle, it may be determined that the driver is distracted. Alternately, the driver may have taken his/her hands from the driving wheel, which may be determined by the front-facing camera, for example, indicating that the driver may have a manual distraction. Other example manual distractions may include the driver using a cell phone for texting or dialing, or picking up objects that may have fallen to the floor of the vehicle. The driver may additionally or alternatively have taken his mind off driving, indicating a cognitive distraction. For example, the driver may be nodding his head while listening to loud music, both which may be determined from the driver-facing camera and microphone in the mobile device. At 606 of method 600, the data may be analyzed or may be used to predict the environmental dangers or risks. The environmental dangers or risks may include the number of vehicles in front of the vehicle in which the head unit/wearable device of the distraction monitoring system resides, in one example. Additionally or alternately, the environmental dangers or risks may include whether the vehicle is in a school or hospital zone, for example. The environmental dangers or risks may also include the weather conditions as determined by weather sensors, and may indicate whether it is raining or snowing, or if the outside temperatures are freezing, for example. Additionally or alternately, environmental risks or dangers may include determining if there are objects in the path of the vehicle, and determining if there is a possibility of the trajectories of the objects and vehicle intersecting. At 608 of method 600, the number of driver distractions may be determined. For example, the driver may be texting on his phone, which may include both visual and manual distraction. There may be more than one distraction at any given time, and the total number of distractions of the driver may be determined at 608. Likewise, there may be several environmental risks or dangers and at 610, the total number of environmental risks or dangers may be determined. For example, the number of objects in the path of the vehicle (or having a trajectory that intersects the trajectory of the vehicle) may be determined at 610. At 612 of method 600, the distraction severity may be determined by prioritizing and calculating a severity rank R based on the analysis performed at 604-610 of FIG. 6, examples of which are shown in FIG. 7. The prioritization and ranking may yield an integer severity rank, R, which may have values and/or value ranges mapped to different actions (e.g., presenting visual alerts, audio alerts, performing vehicle control, etc.). At 614, the method includes performing an action based on the severity rank (e.g., as described above with respect to FIG. 4).

FIG. 7 is a table 700 for calculating severity rank R, based on the driver distraction and environmental risks/dangers as discussed above. As an example scenario, if it is determined that the driver is not looking ahead, indicating a visual distraction and that the vehicle is stopped at a traffic signal, then the severity rank assigned is low, say R=1, for example. However, if it is determined that the driver is not looking ahead, and that the vehicle is approaching a turn in the city at high speed, then the severity rank is determined to be high, R=8, for example. As another example, if the driver is on the phone, but is using hands free and is on the freeway, then a medium severity rank such as R=4 may be determined. However, if the driver is on the phone, but not using hands free, and is approaching a turn in the city at high speed, a high severity rank such as R=8, may be determined. More example scenarios and the corresponding severity rank are shown in FIG. 7. At 612 of method 600, the severity rank is determined and prioritized as explained and the method 600 proceeds to 614 where the appropriate action based on the severity rank R as explained in FIG. 4 may be performed. Briefly, if the severity rank R is within a first range (i.e., low), a visual warning may be presented to the driver. If the severity rank R is within a second range, then an audio warning may be presented to the driver. If the severity rank is within a third range, then engine control operations may be performed as explained in FIG. 4. It is to be understood that the values and scenarios described in FIG. 7 are examples and are not intended to be limiting. Any suitable action may be mapped to any suitable severity ranking, which may be mapped to any suitable combination of driver states, object states, and vehicle states.

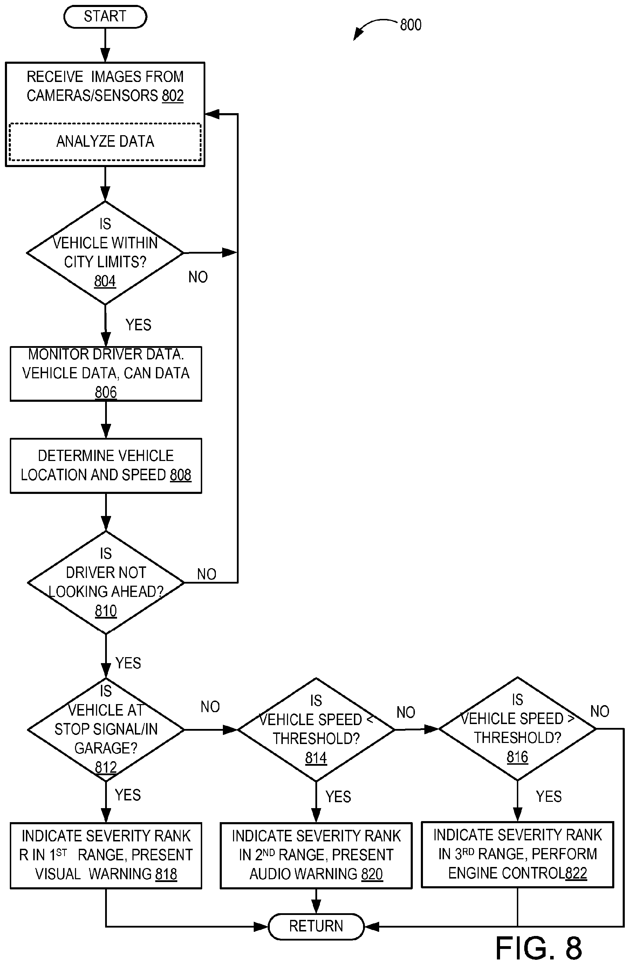

FIG. 8 is a flow chart of an example method 800 for determining the severity rank R and performing an associated action. Method 800 may be performed by a distraction monitoring system, such as systems 300a and 300b of FIGS. 3A and 3B. Method 800 includes receiving data from the cameras and sensors at 802, and further analyzing the data as explained in FIG. 5. At 804, it may be determined if the vehicle is within city limits. This may be determined by performing video scene analysis on the data received from the front-facing camera, for example. If the vehicle is not within city limits, the method 800 returns to 802 where the system continues to receive and analyze data. If at 804 of method 800, it is determined that the vehicle is within city limits, then the method 800 proceeds to 806, where the driver data, vehicle data and CAN (e.g., vehicle) data may be monitored. At 808, the method 800 includes determining vehicle speed and location information. For example, the vehicle speed information may be determined from the CAN, and the vehicle location may be determined from the video scene analysis performed on the images from the front-facing camera. At 810 of method 800 includes checking if driver is not looking ahead. This may be determined by analyzing the images from the driver-facing camera, for example. If it is determined that the driver is looking ahead, then the method 800 proceeds to 802, where it continues to receive and analyze data as explained earlier. If at 810, it is determined that the driver is not looking ahead, then the method 800 proceeds to 812, where it is checked if the vehicle is at a stop signal or in a garage, for example. If from the front-facing camera and the CAN data it is determined that the vehicle is in a garage, or at a stop signal, then the method 800 proceeds to 818, where it may be indicated that the severity rank is in the first range (low) and a visual warning may be presented to the driver. The visual warning serves as a first level warning to the driver, especially if the vehicle is at a stop signal, indicating to the driver that he may want to start looking ahead. If the vehicle is in a garage, the visual warning may serve as a reminder for the driver to check that the vehicle is in reverse gear for example. Alternately, the driver may be sitting in the vehicle and looking at a map, for example, in which case, the visual warning may serve as a reminder for the driver to turn off the unit. At 812, if it is determined that the vehicle is not at a stop signal or garage, then the method 800 proceeds to 814, where the vehicle speed as determined from the CAN data, may be compared with a threshold. The threshold may be determined from the city speed limit, with additional information about the traffic conditions, as an example. If the vehicle speed is less than the threshold speed, then the method 800 proceeds to 820, where it may be indicated that the severity rank is within the second range (medium), and an audio warning may be presented. When the audio warning is presented, the driver may be warned to take appropriate action, which in this case may be to start looking ahead, in order to avoid an accident, for example. If at 814, it is determined that the vehicle speed is not less than the threshold, then the method 800 proceeds to 816, where it is checked if the vehicle speed is greater than the threshold. If no, then the method 800 returns. If yes, then the method 800 proceeds to 822 where it may be indicated that the severity rank R is within the third range (high) and engine control actions may be performed. This may include reducing vehicle speed, for example.

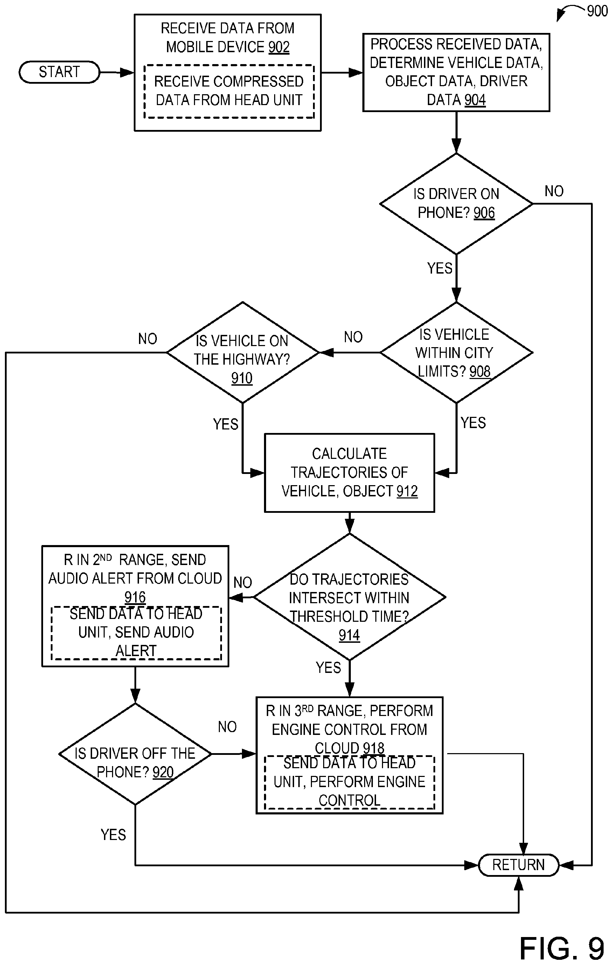

FIG. 9 is a flow chart of another example method 900 of determining a severity rank for a set of driver, object, and vehicle data. For example, method 900 may be performed by distraction monitoring system 300a/300b of FIGS. 3A and 3B. At 902, the method includes receiving data from a mobile device. For example, if performed at a cloud computing device of the distraction monitoring system (e.g., cloud computing device 322 of FIG. 3B), the method may include receiving compressed data from a head unit of the distraction monitoring system (e.g., head unit 302b of FIG. 3B). At 904, the method includes processing the received data to determine vehicle data/state, object data/state, and driver data/state. At 906, the method includes determining if the driver is on the phone. For example, the system may evaluate the driver data to determine if the driver is talking and/or evaluate the vehicle data to determine whether a phone call is detected (e.g., if the driver's phone is communicatively connected to the head unit). If the driver is not on the phone (and if no other driver distraction is detected), the method returns to continue monitoring data from the mobile device without performing an action. Accordingly, if no distraction is detected, the system does not perform an action that is selected based on correlating vehicle, object, and driver data/states.

Conversely, if the driver is determined to be on the phone, the method proceeds to 908 to determine if the vehicle is within city limits. If the vehicle is not within city limits, the method proceeds to 910 to determine if the vehicle is on the highway. If the vehicle is not on the highway, the vehicle may be determined to be stopped and/or in a stationary location, and thus driver distraction may not be severe enough to warrant taking action. It is to be understood that other parameters may be evaluated, such as engine status (e.g., whether the engine is stopped) in order to validate the determination that the vehicle is stopped and out of danger. If, however, the vehicle is determined to be within city limits or on the highway, the method proceeds to 912 to calculate trajectories of the vehicle and any objects imaged in the vehicle environment. At 914, the method includes determining if the estimated trajectories intersect within a threshold time. For example, trajectories that are estimated to intersect at a relatively nearby time may result in a higher severity ranking than severity rankings that result from trajectories that are estimated to intersect at a relatively far away time. If the trajectories do not intersect within the threshold time at 914, the method proceeds to set R to a value within a second (e.g., medium) range, and send an audio alert at 916. For example, the cloud computing device may send a command to the head unit to send an audio alert.

If the trajectories intersect within the threshold time, the ranking is set to a third range (e.g., high), and an engine control is performed at 918. For example, the cloud computing device may send a command to the head unit to send a control instruction via the CAN bus to a vehicle control system to change an engine operating condition. If the severity ranking was indicated to be in the second range at 916, the method further includes determining if the driver is off of the phone at 920. For example, after presenting the audio alert, the system may wait a threshold period of time, then determine if the driver responded to the alert by ending the phone call. If the driver ended the phone call responsive to the alert, the method returns to continue monitoring driver, object, and vehicle states. Conversely, if the driver did not end the phone call, the method proceeds to 918 to upgrade the severity ranking from the second range to the third range. It is to be understood that in other examples, the upgrade may be to a different type of audio alert (e.g., a heightened volume, a different recorded tone or message, a different frequency, etc.), a combination of an audio and a visual alert, and/or any other suitable change to the alert.

By correlating data from multiple sources as described above, the distraction monitoring systems of this disclosure may provide an appropriate response to both a type and a severity of driver distraction. In this way, the driver may be more likely to positively correct the distraction relative to systems that only rely on one type of data to drive distraction alerts.

In one example, an in-vehicle computing system of a vehicle comprises an external device interface communicatively connecting the in-vehicle computing system to a mobile device, an inter-vehicle system communication module communicatively connecting the in-vehicle computing system to one or more vehicle systems of the vehicle, a processor, and a storage device. The storage device stores instructions executable by the processor to receive image data from the mobile device via the external device interface, the image data imaging a driver and a driver environment, determine a driver state based on the received image data, and, responsive to determining that the driver state indicates that the driver is distracted, receive vehicle data from one or more of the vehicle systems via the inter-vehicle system communication module, determine a vehicle state based on the vehicle data, determine a distraction severity level based on the driver state and the vehicle state, and control one or more devices of the vehicle to perform a selected action based on the distraction severity level.

In the above example, the instructions of the in-vehicle computing system may additionally or alternatively be further executable to perform the selected action by: presenting a visual warning responsive to the distraction severity level being within a first range, presenting an audio warning responsive to the distraction severity level being within a second range, and performing the selected action comprises performing an automatic adjustment of a vehicle control warning responsive to the distraction severity level being within a third range.

In either of the above examples, the in-vehicle computing system may additionally or alternatively further comprise a display device, and the visual warning may additionally or alternatively comprise a visual alert presented via the display device.

In any of the above examples, the audio warning may additionally or alternatively comprise an audio alert presented via one or more speakers in the vehicle.

In any of the above examples, the automatic adjustment of the vehicle control may additionally or alternatively comprise automatic adjustment of engine operation.

In any of the above examples, the mobile device may additionally or alternatively comprise a wearable device including at least an outward-facing camera having a field of view that includes a vehicle environment, and a user-facing camera having a field of view that includes the driver of the vehicle.

In any of the above examples, the instructions may additionally or alternatively be further executable to receive position and motion data from the head-mounted device, determine the driver state based on image data and the position and motion data, and transmit image data comprising video data including one or more of the driver as imaged from the user-facing camera and the vehicle environment as imaged from the outward-facing camera.

In any of the above examples, the image data may additionally or alternatively include an indication of driver gaze and objects of interest in a travel path of the vehicle, and the driver state may additionally or alternatively indicate that the driver is distracted responsive to determining that the driver gaze is directed to one or more objects of interest for a threshold period of time.

In another example, a method for an in-vehicle computing system of a vehicle comprises receiving driver data from a wearable device, the driver data including image data from a driver-facing camera, receiving object data from one or more imaging devices of at least one of the wearable device and the vehicle, the object data including image data of a vehicle environment, receiving vehicle data from one or more vehicle systems, the vehicle data including an indication of an operating condition of the vehicle, and determining whether a driver is distracted by correlating the driver data with the object data. The method further includes, responsive to determining that the driver is distracted, selecting an action based on correlating the driver data with the object data and the vehicle data and performing the selected action, and, responsive to determining that the driver is not distracted, maintaining current operating parameters.

In the above example, the object data may additionally or alternatively include a total number of objects in a vehicle environment as determined from the image data from the one or more outward-facing cameras, and object trajectory information for each of the objects in the vehicle environment as determined from a comparison of a plurality of frames of image data from the one or more outward-facing cameras, the object trajectory information indicating an estimated trajectory of each of the objects.

In either of the above examples, vehicle data may additionally or alternatively include vehicle trajectory information determined from one or more of a navigational system of the vehicle, sensor output of the wearable device, and image data from the one or more outward-facing cameras, the vehicle trajectory information indicating an estimated trajectory of the vehicle.

In any of the above examples, the method may additionally or alternatively further comprise comparing the estimated trajectory of each of the objects and the estimated trajectory of the vehicle to determine intersections between the estimated trajectories of the objects and the estimated trajectory of the vehicle, wherein the selected action is selected based on the number of intersections between the estimated trajectories of the objects and the estimated trajectory of the vehicle.

In any of the above examples, the selected action may additionally or alternatively be further selected based on a vehicle speed and a gaze direction of the driver.

In any of the above examples, a first action may additionally or alternatively be selected responsive to determining that the estimated trajectory of at least one of the objects intersects the estimated trajectory of the vehicle and the vehicle speed is below a speed threshold, and a second action may additionally or alternatively be selected responsive to determining that the estimated trajectory of at least one of the objects intersects the estimated trajectory of the vehicle, the vehicle speed is above the speed threshold, and the gaze direction of the driver intersected the current location of each of the at least one objects within a threshold time period and for a threshold duration.

In any of the above examples, a third action may additionally or alternatively be selected responsive to determining that the estimated trajectory of at least one of the objects intersects the estimated trajectory of the vehicle, the vehicle speed is above the speed threshold, and the gaze direction of the driver did not intersect the current location of each of the at least one objects within the threshold time period or for the threshold duration.

In any of the above examples, the first action may additionally or alternatively be a visual alert presented via a display in the vehicle, the second action may additionally or alternatively be an audible alert presented via one or more speakers in the vehicle, and the third action may additionally or alternatively be a vehicle control command issued from the in-vehicle computing system to a vehicle system to control engine operation of the vehicle.

In any of the above examples, maintaining the current operating parameters may additionally or alternatively comprise not performing an action that is based on correlating the driver data with the object data and the vehicle data.

In still another example, a system for identifying driver distraction comprises a wearable device including a driver-facing camera, an outward-facing camera, and one or more sensors, an in-vehicle computing system communicatively connected to the wearable device and one or more vehicle systems, the in-vehicle computing system comprising a first processor and a first storage device, and a cloud computing device remote from the in-vehicle computing system and communicatively connected to the in-vehicle computing system via a network. The cloud computing device comprises a second processor and a second storage device, and one or more of the first storage device and the second storage device storing first instructions executable by a respective one or more of the first processor and the second processor to: receive image data from the driver-facing camera and sensor data from the one or more sensors of the wearable device indicating a driver state, receive image data from the outward-facing camera of the wearable device indicating object states of one or more objects, and receive vehicle data from one or more vehicle systems to indicate vehicle state. The first instructions are further executable by a respective one or more of the first processor and the second processor to select an action to be performed based on the indicated driver state, object states, and vehicle state. The first storage device stores second instructions executable by the first processor to transmit a command to one or more of a display device of the in-vehicle computing system, an audio device of the vehicle, and an engine control unit of the vehicle to perform the selected action.

In the above example, the vehicle state may additionally or alternatively include a trajectory of the vehicle, the object states may additionally or alternatively include trajectories of the one or more objects, and the driver state may additionally or alternatively include a gaze direction of the driver.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the distraction monitoring system 300a/300b, the head unit 304a/304b, and/or cloud computing device 322 described with reference to FIGS. 3A and 3B. The methods may be performed by executing stored instructions with one or more logic devices (e.g., processors) in combination with one or more additional hardware elements, such as storage devices, memory, hardware network interfaces/antennas, switches, actuators, clock circuits, etc. The described methods and associated actions may also be performed in various orders in addition to the order described in this application, in parallel, and/or simultaneously.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. An in-vehicle computing system (200) of a vehicle (201), the in-vehicle computing system (200) comprising:
an external device interface (212) communicatively connecting the in-vehicle computing system (200) to a wearable device (302), the wearable device (302) comprising a front-facing camera which captures images of an environment surrounding the vehicle (201), and a driver-facing camera which monitors a driver and their movement when inside the vehicle (201);
an inter-vehicle system communication module (222) communicatively connecting the in-vehicle computing system (200) to one or more vehicle systems (231) of the vehicle (201);
a processor (214); and
a storage device (208) storing instructions executable by the processor (214) to:
receive image data from the driver-facing camera of the wearable device (302) via the external device interface (212);
determine a driver state based on the received image data;
responsive to determining that the driver state indicates that the driver is distracted:
receive vehicle data from one or more of the vehicle systems (231) via the inter-vehicle system communication module (222);
determine a vehicle state based on the vehicle data;
determine object data comprising objects in a path of the vehicle (201) and trajectories of objects in the path of the vehicle (201) based on the received image data from the front-facing camera;
determine a distraction severity rank (R) based on a combination of the driver state, the object data, and the vehicle state, wherein the vehicle state includes a vehicle speed, a vehicle trajectory, and a vehicle location; and
control one or more devices of the vehicle (201) to perform a selected action based on the distraction severity rank (R).

2. The in-vehicle computing system (200) of claim 1, wherein
performing the selected action comprises presenting a visual warning responsive to the distraction severity rank (R)being within a first range;
performing the selected action comprises presenting an audio warning responsive to the distraction severity rank (R) being within a second range; and
performing the selected action comprises performing an automatic adjustment of a vehicle control warning responsive to the distraction severity rank (R) being within a third range.

3. The in-vehicle computing system (200) of claim 2, wherein at least one of the following applies:
the system further comprises a display device, wherein the visual warning comprises visual alert presented via the display device;
the audio warning comprises an audio alert presented via one or more speakers in the vehicle (201); and
automatic adjustment of the vehicle control comprises automatic adjustment of engine operation.

4. The in-vehicle computing system (200) of any of claims 1 to 3, wherein the distraction severity rank (R) is determined to be in the first range based on the driver not looking ahead, the vehicle speed being zero and the vehicle being at a stop sign or in a garage.

5. The in-vehicle computing system (200) of claim 4, wherein the instructions are further executable to receive position and motion data from the wearable device (302), determine the driver state based on image data and the position and motion data, and transmit image data comprising video data including one or more of the driver as imaged from the driver-facing camera and the vehicle environment as imaged from the front-facing camera, and wherein the distraction severity rank (R) is determined to be in the second range based on the driver not looking ahead and the vehicle speed being below a threshold.

6. The in-vehicle computing system (200) of claim 5, wherein the image data includes an indication of driver gaze and objects of interest in a travel path of the vehicle (201), and wherein the driver state indicates that the driver is distracted responsive to determining that the driver gaze is directed to one or more objects of interest for a threshold period of time, and wherein the distraction severity rank (R) is determined to be in the third range and engine control actions are performed based on the driver not looking ahead and the vehicle speed being above a threshold, and wherein the threshold is based on one or more of a posted speed limit and traffic conditions.

7. The in-vehicle computing system (200) of claim 6, wherein the image data includes an indication of a trajectory of the objects of interest, and wherein the distraction severity rank (R) is based on a comparison of the trajectory of the objects of interest and the travel path of the vehicle (201).

8. A method for an in-vehicle computing system (200) of a vehicle (201), the method comprising:
receiving image data from a driver-facing camera of a wearable device (302);
determining a driver state based on the received image data;
responsive to determining that the driver state indicates that the driver is distracted:
receiving vehicle data from one or more vehicle systems (231);
determining a vehicle state based on the vehicle data;
determining object data comprising objects in a path of the vehicle (209) and trajectories of the objects in the path of the vehicle (201) based on image data received from a front-facing camera of the wearable device (302);
determining a distraction severity rank (R) based on a combination of the driver state, the object data, and the vehicle state, wherein the vehicle state includes a vehicle speed, a vehicle trajectory, and a vehicle location; and
controlling one or more devices of the vehicle (201) to perform a selected action based on the distraction severity rank (R).

9. The method of claim 8, wherein the object data includes:
a total number of objects in a vehicle environment as determined from the image data from the one or more front-facing cameras, and
object trajectory information for each of the objects in the vehicle environment as determined from a comparison of a plurality of frames of image data from the one or more front-facing cameras, the object trajectory information indicating an estimated trajectory of each of the objects.

10. The method of claim 9, wherein vehicle data includes vehicle trajectory information determined from one or more of a navigational system of the vehicle (201), sensor output of the wearable device (302), and image data from the one or more front-facing cameras, the vehicle trajectory information indicating an estimated trajectory of the vehicle (201).

11. The method of claim 10, further comprising comparing the estimated trajectory of each of the objects and the estimated trajectory of the vehicle (201) to determine intersections between the estimated trajectories of the objects and the estimated trajectory of the vehicle (201), wherein the selected action is selected based on the number of intersections between the estimated trajectories of the objects and the estimated trajectory of the vehicle (201).

12. The method of claim 11, wherein at least one of the following applies:
the selected action is further selected based on a vehicle speed and a gaze direction of the driver; and
a first action is selected responsive to determining that the estimated trajectory of at least one of the objects intersects the estimated trajectory of the vehicle (201) and the vehicle speed is below a speed threshold, and a second action is selected responsive to determining that the estimated trajectory of at least one of the objects intersects the estimated trajectory of the vehicle (201), the vehicle speed is above the speed threshold, and the gaze direction of the driver intersected the current location of each of the at least one objects within a threshold time period and for a threshold duration.

13. The method of claim 12, wherein a third action is selected responsive to determining that the estimated trajectory of at least one of the objects intersects the estimated trajectory of the vehicle (201), the vehicle speed is above the speed threshold, and the gaze direction of the driver did not intersect the current location of each of the at least one objects within the threshold time period or for the threshold duration, and wherein the first action is further selected based on the driver not looking ahead, the vehicle speed being zero, and the vehicle being at a stop sign or in a garage.

14. The method of claim 13, wherein the first action is a visual alert presented via a display in the vehicle (201), the second action is an audible alert presented via one or more speakers in the vehicle (201), and the third action is a vehicle control command issued from the in-vehicle computing system (200) to a vehicle system (231) to control engine operation of the vehicle (201), and wherein the second action is further selected based on the driver not looking ahead and the vehicle speed being below a threshold.

## Patentansprüche

1. Fahrzeuginternes Rechensystem (200) eines Fahrzeugs (201), wobei das fahrzeuginterne Rechensystem (200) Folgendes umfasst:
eine externe Vorrichtungsschnittstelle (212), die das fahrzeuginterne Rechensystem (200) kommunikativ mit einer tragbaren Vorrichtung (302) verbindet, wobei die tragbare Vorrichtung (302) eine nach vorne gewandte Kamera, die Bilder der Umgebung des Fahrzeugs (201) aufnimmt, und eine dem Fahrer zugewandte Kamera umfasst, die den Fahrer und seine Bewegungen in dem Fahrzeug (201) überwacht;
ein fahrzeugübergreifendes Systemkommunikationsmodul (222), welches das fahrzeuginterne Rechensystem (200) mit einem oder mehreren Fahrzeugsystemen (231) des Fahrzeugs (201) kommunikativ verbindet;
einen Prozessor (214); und
eine Speichervorrichtung (208), die durch den Prozessor (214) ausführbare Anweisungen zu Folgendem speichert:
Empfangen von Bilddaten von der dem Fahrer zugewandten Kamera der tragbaren Vorrichtung (302) über die externe Vorrichtungsschnittstelle (212);
Bestimmen eines Fahrerzustands basierend auf den empfangenen Bilddaten;
als Reaktion auf das Bestimmen, dass der Fahrerzustand angibt, dass der Fahrer abgelenkt ist:
Empfangen von Fahrzeugdaten von einem oder mehreren der Fahrzeugsysteme (231) über das fahrzeugübergreifende Systemkommunikationsmodul (222);
Bestimmen eines Fahrzeugzustands basierend auf den Fahrzeugdaten;
Bestimmen von Objektdaten, die Objekte auf einem Weg des Fahrzeugs (201) und Trajektorien von Objekten auf dem Weg des Fahrzeugs (201) umfassen, basierend auf den empfangenen Bilddaten von der nach vorne gewandten Kamera;
Bestimmen eines Ablenkungsschweregrads (R) basierend auf einer Kombination aus dem Fahrerzustand, den Objektdaten und dem Fahrzeugzustand, wobei der Fahrzeugzustand eine Fahrzeuggeschwindigkeit, eine Fahrzeugtrajektorie und einen Fahrzeugstandort beinhaltet; und
Steuern einer oder mehrerer Vorrichtungen des Fahrzeugs (201), um basierend auf dem Ablenkungsschweregrad (R) eine ausgewählte Aktion durchzuführen.

2. Fahrzeuginternes Rechensystem (200) nach Anspruch 1, wobei das Durchführen der ausgewählten Aktion Präsentieren einer visuellen Warnung als Reaktion darauf umfasst, dass der Ablenkungsschweregrad (R) innerhalb eines ersten Bereichs liegt; das Durchführen der ausgewählten Aktion Präsentieren einer akustischen Warnung als Reaktion darauf umfasst, dass der Ablenkungsschweregrad (R) innerhalb eines zweiten Bereichs liegt; und
das Durchführen der ausgewählten Aktion Durchführen einer automatischen Anpassung einer Fahrzeugsteuerungswarnung als Reaktion darauf umfasst, dass der Ablenkungsschweregrad (R) innerhalb eines dritten Bereichs liegt.

3. Fahrzeuginternes Rechensystem (200) nach Anspruch 2, wobei mindestens eines von Folgendem zutrifft:
das System umfasst ferner eine Anzeigevorrichtung, wobei die visuelle Warnung einen visuellen Alarm umfasst, der über die Anzeigevorrichtung präsentiert wird;
die akustische Warnung umfasst einen akustischen Alarm, der über einen oder mehrere Lautsprecher in dem Fahrzeug (201) präsentiert wird; und
die automatische Anpassung der Fahrzeugsteuerung umfasst eine automatische Anpassung des Motorbetriebs.

4. Fahrzeuginternes Rechensystem (200) nach einem der Ansprüche 1 bis 3, wobei der Ablenkungsschweregrad (R) als im ersten Bereich liegend bestimmt wird, basierend darauf, dass der Fahrer nicht nach vorne schaut, die Fahrzeuggeschwindigkeit null beträgt und sich das Fahrzeug an einem Stoppschild oder in einer Garage befindet.

5. Fahrzeuginternes Rechensystem (200) nach Anspruch 4, wobei die Anweisungen ferner dazu ausführbar sind, Positions- und Bewegungsdaten von der tragbaren Vorrichtung (302) zu empfangen, den Fahrerzustand basierend auf Bilddaten und den Positions- und Bewegungsdaten zu bestimmen und Bilddaten zu übertragen, die Videodaten umfassen, einschließlich eines oder mehrerer Bilder des Fahrers, wie sie von der dem Fahrer zugewandten Kamera abgebildet werden, und der Fahrzeugumgebung, wie sie von der nach vorne gewandten Kamera abgebildet wird, und wobei der Ablenkungsschweregrad (R) basierend darauf, dass der Fahrer nicht nach vorne schaut und die Fahrzeuggeschwindigkeit unter einem Schwellenwert liegt, als im zweiten Bereich liegend bestimmt wird.

6. Fahrzeuginternes Rechensystem (200) nach Anspruch 5, wobei die Bilddaten eine Angabe des Blicks des Fahrers und interessierender Objekte auf einem Fahrtweg des Fahrzeugs (201) beinhalten, und wobei der Fahrerzustand angibt, dass der Fahrer abgelenkt ist, als Reaktion auf das Bestimmen, dass der Blick des Fahrers für einen Schwellenzeitraum auf ein oder mehrere interessierende Objekte gerichtet ist, und wobei bestimmt wird, dass der Ablenkungsschweregrad (R) im dritten Bereich liegt, und Motorsteuerungsaktionen basierend darauf durchgeführt werden, dass der Fahrer nicht nach vorne schaut und die Fahrzeuggeschwindigkeit über einem Schwellenwert liegt, und wobei der Schwellenwert auf einem oder mehreren von einer angegebenen Geschwindigkeitsbegrenzung und/oder Verkehrsbedingungen basiert.

7. Fahrzeuginternes Rechensystem (200) nach Anspruch 6, wobei die Bilddaten eine Angabe einer Trajektorie der interessierenden Objekte beinhalten und wobei der Ablenkungsschweregrad (R) auf einem Vergleich der Trajektorie der interessierenden Objekte und dem Fahrtweg des Fahrzeugs (201) basiert.

8. Verfahren für ein fahrzeuginternes Rechensystem (200) eines Fahrzeugs (201), wobei das Verfahren umfasst:
Empfangen von Bilddaten von einer dem Fahrer zugewandten Kamera einer tragbaren Vorrichtung (302);
Bestimmen eines Fahrerzustands basierend auf den empfangenen Bilddaten;
als Reaktion auf das Bestimmen, dass der Fahrerzustand angibt, dass der Fahrer abgelenkt ist:
Empfangen von Fahrzeugdaten von einem oder mehreren Fahrzeugsystemen (231);
Bestimmen eines Fahrzeugzustands basierend auf den Fahrzeugdaten;
Bestimmen von Objektdaten, die Objekte auf einem Weg des Fahrzeugs (209) und Trajektorien von den Objekten auf dem Weg des Fahrzeugs (201) umfassen, basierend auf Bilddaten, die von einer nach vorne gewandten Kamera der tragbaren Vorrichtung (302) empfangen werden;
Bestimmen eines Ablenkungsschweregrads (R) basierend auf einer Kombination aus dem Fahrerzustand, den Objektdaten und dem Fahrzeugzustand, wobei der Fahrzeugzustand eine Fahrzeuggeschwindigkeit, eine Fahrzeugtrajektorie und einen Fahrzeugstandort beinhaltet; und
Steuern einer oder mehrerer Vorrichtungen des Fahrzeugs (201), um basierend auf dem Ablenkungsschweregrad (R) eine ausgewählte Aktion durchzuführen.

9. Verfahren nach Anspruch 8, wobei die Objektdaten beinhalten:
eine Gesamtzahl von Objekten in einer Fahrzeugumgebung, die aus den Bilddaten der einen oder mehreren nach vorne gewandten Kameras bestimmt wird, und
Objekttrajektorieinformationen für jedes der Objekte in der Fahrzeugumgebung, die aus einem Vergleich einer Vielzahl von Bilddaten-Frames von der einen oder den mehreren nach vorne gewandten Kameras bestimmt werden, wobei die Objekttrajektorieinformationen eine geschätzte Trajektorie jedes der Objekte angeben.

10. Verfahren nach Anspruch 9, wobei die Fahrzeugdaten Fahrzeugtrajektorieinformationen beinhalten, die von einem oder mehreren eines Navigationssystems des Fahrzeugs (201), Sensorausgaben der tragbaren Vorrichtung (302) und Bilddaten von der einen oder den mehreren nach vorne gewandten Kameras bestimmt werden, wobei die Fahrzeugtrajektorieinformationen eine geschätzte Trajektorie des Fahrzeugs (201) angeben.

11. Verfahren nach Anspruch 10, ferner umfassend Vergleichen der geschätzten Trajektorie jedes der Objekte und der geschätzten Trajektorie des Fahrzeugs (201), um Schnittpunkte zwischen den geschätzten Trajektorien der Objekte und der geschätzten Trajektorie des Fahrzeugs (201) zu bestimmen, wobei die ausgewählte Aktion basierend auf der Anzahl der Schnittpunkte zwischen den geschätzten Trajektorien der Objekte und der geschätzten Trajektorie des Fahrzeugs (201) ausgewählt wird.

12. Verfahren nach Anspruch 11, wobei mindestens eines von Folgendem zutrifft:
die ausgewählte Aktion wird ferner basierend auf einer Fahrzeuggeschwindigkeit und einer Blickrichtung des Fahrers ausgewählt; und
eine erste Aktion wird als Reaktion auf das Bestimmen ausgewählt, dass die geschätzte Trajektorie von mindestens einem der Objekte die geschätzte Trajektorie des Fahrzeugs (201) schneidet und die Fahrzeuggeschwindigkeit unter einem Geschwindigkeitsschwellenwert liegt, und eine zweite Aktion wird als Reaktion auf das Bestimmen ausgewählt, dass die geschätzte Trajektorie von mindestens einem der Objekte die geschätzte Trajektorie des Fahrzeugs (201) schneidet, die Fahrzeuggeschwindigkeit über dem Geschwindigkeitsschwellenwert liegt und die Blickrichtung des Fahrers den aktuellen Standort jedes des mindestens einen Objekts innerhalb eines Schwellenzeitraums und für eine Schwellendauer schneidet.

13. Verfahren nach Anspruch 12, wobei eine dritte Aktion ausgewählt wird als Reaktion auf das Bestimmen, dass die geschätzte Trajektorie von mindestens einem der Objekte die geschätzte Trajektorie des Fahrzeugs (201) schneidet, die Fahrzeuggeschwindigkeit über dem Geschwindigkeitsschwellenwert liegt und die Blickrichtung des Fahrers den aktuellen Standort jedes des mindestens einen Objekts innerhalb des Schwellenzeitraums oder für die Schwellendauer nicht geschnitten hat, und wobei die erste Aktion ferner basierend darauf ausgewählt wird, dass der Fahrer nicht nach vorne blickt, die Fahrzeuggeschwindigkeit null beträgt und sich das Fahrzeug an einem Stoppschild oder in einer Garage befindet.

14. Verfahren nach Anspruch 13, wobei die erste Aktion eine visuelle Warnung ist, die über eine Anzeige im Fahrzeug (201) präsentiert wird, die zweite Aktion eine akustische Warnung ist, die über einen oder mehrere Lautsprecher im Fahrzeug (201) präsentiert wird, und die dritte Aktion ein Fahrzeugsteuerbefehl ist, der von dem fahrzeuginternen Rechensystem (200) einem Fahrzeugsystem (231) präsentiert wird, um den Motorbetrieb des Fahrzeugs (201) zu steuern, und wobei die zweite Aktion ferner basierend darauf ausgewählt wird, dass der Fahrer nicht nach vorne schaut und die Fahrzeuggeschwindigkeit unter einem Schwellenwert liegt.

## Revendications

1. Système informatique embarqué (200) d'un véhicule (201), le système informatique embarqué (200) comprenant :
une interface de dispositif externe (212) connectant de manière communicative le système informatique embarqué (200) à un dispositif portable (302), le dispositif portable (302) comprenant une caméra orientée vers l'avant qui capture des images d'un environnement entourant le véhicule (201) et une caméra orientée vers le conducteur qui surveille un conducteur et son mouvement lorsqu'il est à l'intérieur du véhicule (201) ;
un module de communication de système inter-véhicule (222) connectant de manière communicative le système informatique embarqué (200) à un ou plusieurs systèmes de véhicule (231) du véhicule (201) ;
un processeur (214) ; et
un dispositif de stockage (208) stockant des instructions exécutables par le processeur (214) pour :
recevoir des données d'image de la caméra orientée vers le conducteur du dispositif portable (302) via l'interface de dispositif externe (212) ;
déterminer un état de conducteur sur la base des données d'image reçues ;
en réponse à la détermination du fait que l'état du conducteur indique que le conducteur est distrait :
recevoir des données de véhicule provenant d'un ou de plusieurs des systèmes de véhicule (231) via le module de communication de système inter-véhicule (222) ;
déterminer un état du véhicule sur la base des données de véhicule ;
déterminer des données d'objet comprenant des objets sur un trajet de véhicule (201) et des trajectoires d'objets dans le trajet de véhicule (201) sur la base des données d'image reçues provenant de la caméra orientée vers l'avant ;
déterminer un rang de gravité de distraction (R) sur la base d'une combinaison de l'état du conducteur, des données d'objet et de l'état du véhicule, dans lequel l'état du véhicule comporte une vitesse de véhicule, une trajectoire de véhicule et un emplacement de véhicule ; et
commander un ou plusieurs dispositifs du véhicule (201) pour exécuter une action sélectionnée sur la base du rang de gravité de distraction (R).

2. Système informatique embarqué (200) selon la revendication 1, dans lequel
l'exécution de l'action sélectionnée comprend la présentation d'un avertissement visuel en réponse au rang de gravité de distraction (R) se trouvant dans une première plage ;
l'exécution de l'action sélectionnée comprend la présentation d'un avertissement audio en réponse au rang de gravité de distraction (R) se trouvant dans une deuxième plage ; et
l'exécution de l'action sélectionnée comprend l'exécution d'un réglage automatique d'un avertissement de commande de véhicule en réponse au rang de gravité de distraction (R) se trouvant dans une troisième plage.

3. Système informatique embarqué (200) selon la revendication 2, dans lequel au moins l'un des éléments suivants s'applique :
le système comprend en outre un dispositif d'affichage, dans lequel l'avertissement visuel comprend une alerte visuelle présentée via le dispositif d'affichage ;
l'avertissement audio comprend une alerte audio présentée via un ou plusieurs haut-parleurs dans le véhicule (201) ; et
le réglage automatique de la commande de véhicule comprend le réglage automatique du fonctionnement de moteur.

4. Système informatique embarqué (200) selon l'une quelconque des revendications 1 à 3, dans lequel le rang de gravité de la distraction (R) est déterminé comme se trouvant dans la première plage sur la base du fait que le conducteur ne regarde pas devant lui, la vitesse de véhicule étant nulle et le véhicule se trouvant au niveau d'un panneau d'arrêt ou dans un garage.

5. Système informatique embarqué (200) selon la revendication 4, dans lequel les instructions sont en outre exécutables pour recevoir des données de position et de mouvement du dispositif portable (302), déterminer l'état du conducteur sur la base de données d'image et des données de position et de mouvement, et transmettre des données d'image comprenant des données vidéo comportant l'un ou plusieurs parmi le conducteur tel qu'imagé par la caméra orientée vers le conducteur et l'environnement du véhicule tel qu'imagé par la caméra orientée vers l'avant, et dans lequel le rang de gravité de distraction (R) est déterminé comme se trouvant dans le deuxième plage sur la base du fait que le conducteur ne regarde pas devant lui et que la vitesse de véhicule est inférieure à un seuil.

6. Système informatique embarqué (200) selon la revendication 5, dans lequel les données d'image comportent une indication du regard du conducteur et des objets d'intérêt sur un trajet de déplacement du véhicule (201), et dans lequel l'état du conducteur indique que le conducteur est distrait en réponse à la détermination du fait que le regard du conducteur est dirigé vers un ou plusieurs objets d'intérêt pendant une période de temps seuil, et dans lequel le rang de gravité de distraction (R) est déterminé comme se trouvant dans la troisième plage et des actions de commande du moteur sont exécutées sur la base du fait que le conducteur ne regarde pas devant lui et la vitesse de véhicule est supérieure à un seuil, et dans lequel le seuil est basé sur l'une ou plusieurs parmi une limite de vitesse affichée et des conditions de circulation.

7. Système informatique embarqué (200) selon la revendication 6, dans lequel les données d'image comportent une indication d'une trajectoire des objets d'intérêt, et dans lequel le rang de gravité de distraction (R) est basé sur une comparaison de la trajectoire des objets d'intérêt et le trajet de déplacement du véhicule (201).

8. Procédé pour un système informatique embarqué (200) d'un véhicule (201), le procédé comprenant :
la réception de données d'image provenant d'une caméra orientée vers le conducteur d'un dispositif portable (302) ;
la détermination d'un état du conducteur sur la base des données d'image reçues ;
en réponse à la détermination du fait que l'état du conducteur indique que le conducteur est distrait :
la réception de données de véhicule provenant d'un ou de plusieurs systèmes de véhicule (231) ;
la détermination d'un état du véhicule sur la base des données de véhicule ;
la détermination de données d'objet comprenant des objets dans un trajet du véhicule (209) et des trajectoires des objets dans le trajet du véhicule (201) sur la base de données d'image reçues provenant de la caméra orientée vers l'avant du dispositif portable (302) ;
la détermination d'un rang de gravité de distraction (R) sur la base d'une combinaison de l'état du conducteur, des données d'objet et de l'état du véhicule, dans lequel l'état du véhicule comporte une vitesse de véhicule, une trajectoire de véhicule et un emplacement de véhicule ; et
la commande d'un ou de plusieurs dispositifs du véhicule (201) pour exécuter une action sélectionnée sur la base du rang de gravité de distraction (R).

9. Procédé selon la revendication 8, dans lequel les données d'objet comportent :
un nombre total d'objets dans un environnement de véhicule tel que déterminé à partir des données d'image provenant des une ou plusieurs caméras orientées vers l'avant, et
des informations de trajectoire d'objet pour chacun des objets dans l'environnement de véhicule telles que déterminées à partir d'une comparaison d'une pluralité de trames de données d'image provenant des une ou plusieurs caméras orientées vers l'avant, les informations de trajectoire d'objet indiquant une trajectoire estimée de chacun des objets.

10. Procédé selon la revendication 9, dans lequel des données de véhicule comportent des informations de trajectoire de véhicule déterminées à partir d'un ou de plusieurs parmi un système de navigation du véhicule (201), une sortie de capteur du dispositif portable (302) et des données d'image provenant des une ou plusieurs caméras orientées vers l'avant, les informations de trajectoire de véhicule indiquant une trajectoire estimée du véhicule (201).

11. Procédé selon la revendication 10, comprenant en outre la comparaison de la trajectoire estimée de chacun des objets et de la trajectoire estimée du véhicule (201) pour déterminer des intersections entre les trajectoires estimées des objets et la trajectoire estimée du véhicule (201), dans lequel l'action sélectionnée est sélectionnée sur la base du nombre d'intersections entre les trajectoires estimées des objets et la trajectoire estimée du véhicule (201).

12. Procédé selon la revendication 11, dans lequel au moins l'un des éléments suivants s'applique :
l'action sélectionnée est en outre sélectionnée sur la base d'une vitesse de véhicule et d'une direction du regard du conducteur ; et
une première action est sélectionnée en réponse à la détermination du fait que la trajectoire estimée d'au moins un des objets croise la trajectoire estimée du véhicule (201) et que la vitesse de véhicule est inférieure à un seuil de vitesse, et une deuxième action est sélectionnée en réponse à la détermination du fait que la trajectoire estimée d'au moins un des objets croise la trajectoire estimée du véhicule (201), que la vitesse de véhicule est supérieure au seuil de vitesse et que la direction du regard du conducteur a croisé l'emplacement actuel de chacun de l'au moins un objet pendant une période de temps seuil et pendant une durée seuil.

13. Procédé selon la revendication 12, dans lequel une troisième action est sélectionnée en réponse à la détermination du fait que la trajectoire estimée d'au moins un des objets croise la trajectoire estimée du véhicule (201), que la vitesse de véhicule est supérieure au seuil de vitesse et que la direction du regard du conducteur n'a pas croisé l'emplacement actuel de chacun de l'au moins un objet pendant la période de temps seuil ou pendant la durée seuil, et dans lequel la première action est en outre sélectionnée sur la base du fait que le conducteur ne regarde pas devant lui, la vitesse de véhicule étant nulle, et le véhicule se trouvant au niveau d'un panneau d'arrêt ou dans un garage.

14. Procédé selon la revendication 13, dans lequel la première action est une alerte visuelle présentée via un affichage dans le véhicule (201), la deuxième action est une alerte sonore présentée via un ou plusieurs haut-parleurs dans le véhicule (201), et la troisième action est une commande de contrôle de véhicule émise par le système informatique embarqué (200) vers un système de véhicule (231) pour commander un fonctionnement de moteur du véhicule (201), et dans lequel la deuxième action est en outre sélectionnée sur la base du fait que le conducteur ne regarde pas devant lui et que la vitesse de véhicule est inférieure à un seuil.
